# EUROPÄISCHE PATENTSCHRIFT

(11) **EP 3 427 898 B1**
(45) Veröffentlichungstag und Bekanntmachung des Hinweises auf die Patenterteilung: **02.03.2022**
(21) Anmeldenummer: 18183432.6
(22) Anmeldetag: 13.07.2018
(51) Int. Cl.: F16B 31/04, B25B 29/02, B23P 19/06

(54) **BEFESTIGUNGSSYSTEM FÜR MINDESTENS EINE SCHRAUBVERBINDUNG**
FIXING SYSTEM FOR AT LEAST ONE SCREW CONNECTION
SYSTÈME DE FIXATION POUR AU MOINS UN RACCORD À VIS

(30) Priorität: 14.07.2017 DE 102017115954
(43) Veröffentlichungstag der Anmeldung: 16.01.2019
(73) Patentinhaber: Schaaf GmbH & Co. KG, 41812 Erkelenz (DE)
(72) Erfinder: Köllges, Ralf, 41812 Erkelenz (DE)
(74) Vertreter: Geskes, Christoph

(56) Entgegenhaltungen:
- EP-A1- 0 116 488
- WO-A1-00/51791

## Beschreibung

Die vorliegende Erfindung betrifft ein Befestigungssystem für mindestens eine Schraubverbindung, eine Schraubverbindung, hergestellt mit einem derartigen Befestigungssystem, eine Mutter zum Einsatz in einer derartigen Schraubverbindung, eine Mutter-Konushülsen-Kombination zum Einsatz in einer Schraubverbindung, ein Verfahren zur Erstellung mindestens einer Schraubverbindung mit einem derartigen Befestigungssystem sowie eine Verwendung eines derartigen Befestigungssystems.

Bekannte Befestigungssysteme und/oder Befestigungsvorrichtungen für Schraubverbindungen weisen eine Zugeinheit zur Längung eines Gewindebolzens auf, um in einem anschließenden Verfahrensschritt eine Mutter mit dem gelängten Gewindebolzen zu verbinden.

Die DE 199 40 976 A1 offenbart eine Schrauben-Muttereinheit für hydraulische Betätigung, die gebildet ist aus einerseits einer Schraube, die ein Gewinde mit einem Schrauben-Gewindedurchmesser D_{S} und einer Schrauben-Gewindesteigung s und andererseits aus einer Mutter, die ein Gewinde mit einem Mutter-Gewindedurchmesser D_{M}, welcher dem Schrauben-Gewindedurchmesser D_{S} angepasst ist, und eine Mutter-Gewindesteigung m hat, und die bestimmt ist, axial gespannt zu werden mittels einer axial wirkenden Spannvorrichtung, durch die die Schraube so weit gelängt wird, dass die Schrauben-Gewindesteigung um den Wert ds vergrößert ist, die Schrauben-Gewindesteigung s ungleich der Mutter-Gewindesteigung m ist und die Schrauben-Gewindesteigung s etwas kleiner gewählt ist als die Mutter-Gewindesteigung m.

Auch wenn durch die hydraulische Verspannung nach dem Stand der Technik eine feste Schrauben-Mutter-Verbindung gebildet ist, kann sich diese nach einer gewissen Zeit lösen, so dass eine Nachspannung erfolgen muss. Dies ist gerade bei Schrauben-Mutter-Verbindung mit großer Bauform und auch bei solchen nur aufwändig durchführbar, die z.B. schwer erreichbar sind wie Schrauben-Mutter-Verbindungen in Atomreaktoren oder sogenannten Turm-Stoß-Verbindungen von off-shore-Windkraftanlagen. Dies ist arbeitsintensiv und daher mit hohen Kosten verbunden

WO 00/51791 A1 beschreibt ein hydraulisches Spannsystem für eine Mutter auf einem Bolzen. Dieses bekannte Spannsystem umfasst eine Zugeinheit mit einer Druckzelle, einer Zugstange, einer Stangenmutter, einem Abzieher und einer Brücke. Der Bolzen hat ein durchgehendes Außengewinde und an seinem oberen, freien Ende ein Innengewinde. Die Mutter hat ein Innengewinde, das in das Außengewinde greift, und eine konische Außenfläche , die sich nach unten, also zur zu verschraubenden Unterlage hin verjüngt. Eine Konushülse hat eine konische Innenfläche, die an der konischen Außenfläche der Mutter anliegt und sich ebenfalls nach unten, also zur zu verschraubenden Unterlage hin verjüngt. Die Konushülse stützt sich mit ihrer Unterseite über eine Unterlegscheibe auf der Unterlage ab und steht mit ihrer Oberseite radial von der Mutter vor. Die Zugstange hat unten ein Gewindeende , das in das Innengewinde des Bolzens greift, und oberhalb des Gewindeendes eine radial auswärts vorstehende Schulter. Der Abzieher hat ein Innengewinde, das in das Außengewinde des Bolzens greift, und oberhalb des Innengewindes eine radial einwärts vorstehende Schulter, die sich auf der Schulter der Zugstange abstützt. Die Zugstange hat oben ebenfalls ein Gewindeende, das in das Innengewinde der Stangenmutter greift. Die Druckzelle der Zugeinheit umfasst oben einen Kolben und unten einen Zylinder. Der Kolben stützt sich mit seiner Oberseite an der Unterseite der Stangenmutter ab. Der Zylinder stützt sich mit seiner Unterseite - über zwei weitere Druckzellen der Zugeinheit - auf der Oberseite der Brücke ab. Die Brücke stützt sich mit ihrer Unterseite auf der Oberseite der Konushülse ab. Zum Längen des Bolzens werden Zugstange und Abzieher mit dem Innengewinde und dem Außengewinde des Bolzens verschraubt. Dann wird Fluid in die Druckzelle der Zugeinheit gedrückt, wodurch die Stangenmutter nach oben, also von der Brücke und der Unterlage weg gedrückt wird und somit Zug auf die Zugstange und den Abzieher ausgeübt wird. Nach dem Längen des Bolzens kann die Mutter weiter angezogen werden. Bei diesem bekannten Spannsystem umfasst die Mutter eine Bodenfläche und eine der Bodenfläche gegenüberliegende Kopffläche, und die Einschnürung der Konizität der konischen Außenfläche verläuft von der Kopffläche bis zu der Bodenfläche.

Es besteht daher ein Bedarf, eine verbesserte Schrauben-Mutter-Verbindung zur Verfügung zu stellen, welche zumindest eine zeitlich hinausgezögerte Nachspannung ermöglicht, so dass je nach Lebensdauer der verbundenen Bauteile bevorzugt keine Nachspannung derselben notwendig ist.

Es ist Aufgabe der vorliegenden Erfindung, ein Befestigungssystem und eine Schraubenverbindung zur Verfügung zu stellen, das beziehungsweise die gegenüber dem Stand der Technik geringere Folgekosten generiert.

Diese Aufgabe wird erfindungsgemäß gelöst durch die Gegenstände der unabhängigen Ansprüche.

Das erfindungsgemäße Befestigungssystem für mindestens eine Schraubverbindung umfasst mindestens eine Zugeinheit und mindestens eine Druckeinheit, wobei die Druckeinheit ein Gehäuse mit einem ersten oberen Endbereich und einem ersten unteren Endbereich mit einer ersten Ausnehmung umfasst, die nach unten offen ausgebildet ist, und wobei die Druckeinheit am ersten oberen Endbereich des Gehäuses mindestens einen Hülsenhubraum und mindestens eine diesem zugeordnete Hubaufnahme mit einer Druckfläche umfasst, und wobei am ersten unteren Endbereich der Druckeinheit eine Konushülse in die erste Ausnehmung einsetzbar ist, mithin die erste Ausnehmung derart ausgebildet ist, dass eine Konushülse in diese aufnehmbar ist, und die Hubaufnahme der Druckeinheit im Gehäuse derart angeordnet ist, dass die Hubaufnahme mittels hydraulischer und/oder mechanischer Betätigung in Richtung einer Mittellängsachse z des Gehäuses verfahrbar ist und über ein dieser zugeordnetes Druckteil oder unmittelbar eine Kraft F₂ auf die einsetzbare Konushülse ausübt. Bevorzugt erzeugt die Druckeinheit eine Verpressung einer Schraubverbindung. Weiter bevorzugt erzeugt die Druckeinheit eine Verpressung einer durch die Zugeinheit erzeugten verspannten Schraubverbindung.

Durch das erfindungsgemäße Befestigungssystem ist es vorteilhafterweise möglich, Schraubverbindungen zu erstellen, die langandauernd fest sind. Es wird ein sogenannter Verlierschutz geschaffen, der sich selbst unter starken dynamischen Belastungen wie beispielsweise Vibrationen nicht löst. Die Zugeinheit kann dabei zwei Aufgaben übernehmen, nämlich einerseits eine Längung eines zylindrischen Elementes mit einem Außengewinde, insbesondere eines Gewindebolzens, um eine verspannte Schraubverbindung zu erstellen. Andererseits kann die Zugeinheit eine Vorkonditionierung durch mehrfaches bzw. mehrmaliges Längen des zylindrischen Elements bis zu einer vorbestimmten Vorspannkraft durchführen, um im Materialgefüge des zylindrischen Elementes Umlagerungsprozesse zu erzeugen, die sonst bei einer Alterung desselben von statten gehen würden. Die Vorkonditionierung kann, muss aber nicht erfolgen. Durch die Druckeinheit erfolgt eine Verpressung der durch die Zugeinheit gespannten Schraubverbindung bis zum Formschluss. Hierdurch wird eine nahezu unlösbare Verbindung zwischen zylindrischem Element und Mutter geschaffen, die langlebig ist und sich von selbst kaum lösen kann. Zudem ist vorteilhafterweise mit dem erfindungsgemäßen Befestigungssystem ein kostengünstiges und schnelles Erstellen solcher gespannter und verpresster Schraubverbindungen ermöglicht, ein Nachziehen entfallen kann.

Wird im Rahmen der Erfindung der Begriff "etwa" oder "im Wesentlichen", insbesondere in Bezug auf Werte oder Wertebereiche, verwendet, ist hierunter dasjenige zu verstehen, was der Fachmann in dem gegebenen Zusammenhang als fachmännisch üblich ansehen wird. Insbesondere sind Abweichungen der angegeben Werte oder Wertebereiche von ±10 %, bevorzugt ±5 %, weiter bevorzugt von ±2 %, von den Begriffen "etwa" und "im Wesentlichen" umfasst.

Das Gehäuse umschließt die Druckeinheit bevorzugt im Wesentlichen seitlich beziehungsweise vom ersten unteren Endbereich bis zum ersten oberen Endbereich. Bevorzugt ist im Rahmen der Erfindung das Gehäuse als im Wesentlichen starr ausgebildet. Der Begriff "starr" bezieht sich nicht auf die Materialeigenschaften des Befestigungssystems, sondern auf eine bevorzugte axiale Bewegung während der funktionellen Ausübung der Zug- und/oder Druckeinheit.

Der erste untere Endbereich weist die erste Ausnehmung auf, die einen Innenraum bildet und seitlich vom Gehäuse im Wesentlichen umschlossen ist und Platz für eine einsetzbare Konushülse bietet. Erfindungsgemäß ist die erste Ausnehmung nach unten hin und entfernend vom ersten oberen Endbereich offen ausgebildet, so dass durch die gebildete Öffnung die Konushülse in den Innenraum einsetzbar ist.

Die Druckeinheit umfasst am ersten oberen Endbereich den mindestens einen Hülsenhubraum und die mindestens eine Hubaufnahme. Der Hülsenhubraum ist bevorzugt ein in seiner Größe und Volumen variabler Raum, der zu mindestens einer Seite angrenzend an das Gehäuse ist. Der Hülsenhubraum ist bevorzugt mechanisch und weiter bevorzugt hydraulisch öffen- und schließbar. In einer bevorzugten Ausführungsform weist das Befestigungssystem mindestens einen Hydraulikanschluss auf, der bevorzugt mit dem mindestens einen Hülsenhubraum in Verbindung steht. Die Hubaufnahme ist bevorzugt über mindestens eine Achse bewegbar in der Druckeinheit angeordnet. Bevorzugt verfährt die Hubaufnahme nach Ausüben einer Kraft auf eine Fläche der Hubaufnahme, die dem Hülsenhubraum zugewandt ist, in Richtung einer Mittellängsachse z des Gehäuses in Richtung des ersten unteren Endbereiches. Die Mittellängsachse z erstreckt sich bevorzugt in etwa parallel zu einer Längserstreckung des Gehäuses. Das Ausüben der Kraft auf die Fläche der Hubaufnahme geschieht bevorzugt durch das Öffnen des Hülsenhubraums, der sich bevorzugt durch Zugabe einer Hydraulikflüssigkeit öffnet und somit sein Volumen vergrößert. Die Kraft, die bevorzugt auf die Fläche der Hubaufnahme ausgeübt wird, ist somit ein flächenwirkender Druck der Hydraulikflüssigkeit. In einer alternativen Ausführungsform ist eine mechanische Druckbeaufschlagung und damit eine entsprechende Ausbildung der Druckeinheit vorgesehen.

Bevorzugt umfasst die Druckeinheit mindestens eine Hubraumdichtung, die den Hülsenhubraum abdichtet. In einer bevorzugten Ausführungsform, in der der Hülsenhubraum im Wesentlichen rotationssymmetrisch um die Mittellängsachse z ausgebildet ist, ist die Hubraumdichtung bevorzugt als eine Ringdichtung ausgebildet. Die Hubraumdichtung unterbindet ein ungewolltes Verflüchtigen der bevorzugten Hydraulikflüssigkeit aus dem Hülsenhubraum.

Vorzugsweise dichtet mindestens eine Hubraumdichtung den Hülsenhubraum in Richtung des ersten unteren Endbereiches des Gehäuses ab. Bevorzugt dichtet mindestens eine Hubraumdichtung eine Fläche zwischen der Hubaufnahme und dem Gehäuse ab.

Die erfindungsgemäße Zugeinheit des Befestigungssystems ist bevorzugt für die Übertragung einer Zugkraft F_{1,z} auf ein zylindrisches Element, bevorzugt einen Gewindebolzen, im System angeordnet. Das zylindrische Element weist bevorzugt mindestens ein Außengewinde auf.

Die erfindungsgemäße Druckeinheit des Befestigungssystems ist bevorzugt für die Übertragung einer radialen Druckkraft F_{2,r} auf mindestens ein Hohlkörperelement mit mindestens einem Innengewinde, bevorzugt eine Mutter, im System angeordnet.

Das Befestigungssystem ist dergestalt ausgebildet, dass eine Schraubverbindung über die Konushülse und das Hohlkörperelement, bevorzugt einer Mutter, und einem zylindrischen Element mit einem Außengewinde, bevorzugt einem Gewindebolzen, herstellbar ist, wobei das zylindrische Element an mindestens einer systemexklusiven Unterlage angeordnet ist. Die Unterlage, mit der die Schraubverbindung verbunden wird, ist einteilig oder mehrteilig ausgebildet. Soweit in der vorliegenden Erfindung der Begriff "Unterlage", auch im Plural, verwendet wird, sind hierunter beispielsweise Elemente aus dem Bereich der Raffinerien, der chemischen Industrie, der Kraftwerkstechnik und des Schiffsmotorenbaus, Schiffsbaus, der Onshore- und/oder Offshore-Windkraftanlagen zu verstehen. Die Unterlage kann beispielsweise ein Deckel eines Reaktorgefäßes, eine Zylinderabdeckung eines Schiffsmotors oder ein Flansch eines Windkraftanlagenturms sein.

Wird im Rahmen der Erfindung der Begriff "Montage" oder "montierter Zustand" verwendet, ist hierunter ein Anbringen beziehungsweise ein Fixieren der Schraubverbindung mittels des Befestigungssystems an der Unterlage in bevorzugt mehreren Verfahrensschritten zu verstehen.

In einer bevorzugten Ausführungsform weisen die Zugeinheit und die Druckeinheit des Befestigungssystems ein einteiliges Gehäuse auf. Bevorzugt ist die Druckeinheit im Wesentlichen unterhalb der Zugeinheit angeordnet. Der Begriff "unterhalb" bedeutet, dass am ersten oberen Endbereich der Druckeinheit angrenzend die Zugeinheit angeordnet ist. In einer bevorzugten Ausführungsform, in der das Befestigungssystem auf einer Unterlage angeordnet ist, ist die Druckeinheit im Wesentlichen näher zur Unterlage als die Zugeinheit angeordnet. Bevorzugt liegt während einer Montage der erste untere Endbereich der Druckeinheit auf der Unterlage auf.

In einer alternativen Ausführungsform sind die Zugeinheit und die Druckeinheit des Befestigungssystems mindestens zwei getrennte Bauteile und weisen jeweils ein eigenes Gehäuse auf. Mit der Trennung der Zugeinheit von der Druckeinheit ist bei einer Montage die Zugeinheit mit einem zweiten unteren Endbereich angrenzend zur Unterlage angeordnet. Die Trennung der Zugeinheit von der Druckeinheit ist bevorzugt bei räumlich begrenzten Montagen von Vorteil, da eine Höhe des mindestens zweiteiligen Befestigungssystems geringer ist als eine Höhe eines einteiligen Befestigungssystems. Bevorzugt wird während einer Montage die Zugeinheit zuerst zur Erstellung einer gespannten Schraubverbindung eingesetzt und dann abgenommen, nachdem eine Mutter festgezogen wurde, und anschließend in einem weitern bevorzugten Schritt die Druckeinheit mit der verspannten Schraubverbindung verbunden, so dass dann eine Verpressung erfolgen kann.

In einer bevorzugten Ausführungsform umfasst die Hubaufnahme der Druckeinheit zwischen dem ersten oberen Endbereich und der einsetzbaren Konushülse mindestens ein Druckteil.

Das Druckteil ist bevorzugt eine Art Stempel. Vorzugsweise ist das Druckteil in einer perspektivischen Ansicht gekrümmt und/oder länglich ausgebildet. Alternativ sind auch andere Ausgestaltungen des mindestens einen Druckteils möglich. Bevorzugt umfasst die Hubaufnahme eine Mehrzahl von Druckteilen, die sich in Richtung der einsetzbaren Konushülse erstrecken. Die Druckteile der Hubaufnahme sind im Gehäuse bevorzugt symmetrisch zueinander um die Mittellängsachse z angeordnet. Sobald eine Kraft F₂ beziehungsweise ein Druck auf die Hubaufnahme ausgeübt wird, übt die Druckfläche der Hubaufnahme, die im Bereich des Druckteils angeordnet ist, die Kraft F₂ auf die einsetzbare Konushülse aus und insbesondere auf eine Kopffläche der einsetzbaren Konushülse. Vorzugsweise ist eine translatorische Bewegung von der Hubaufnahme auf die einsetzbare Konushülse übertragbar. Besonders bevorzugt sind zwei, drei, vier, fünf, sechs oder mehr Druckteilevorgesehen. Ganz besonders bevorzugt weist die Hubaufnahme zwei Druckteile auf.

Vorzugsweise umfasst die Druckeinheit zwischen der Hubaufnahme und der einsetzbaren Konushülse mindestens ein erstes Federmittel. Bevorzugt sind mehrere Federmittel vorgesehen, die bei einer rotationssymmetrischen Ausbildung des Gehäuses bevorzugt verteilt und weiter bevorzugt gleichmäßig verteilt über einen Umfang desselben in diesem angeordnet sind. Das erste Federmittel weist bevorzugt eine erste obere und eine erste untere Federfläche auf. Bevorzugt sind die erste obere und/oder die erste untere Federfläche Auflageflächen eines oberen Federendes und eines unteren Federendes. Weiter bevorzugt ist die erste obere und/oder die erste untere Federfläche eine Platte beziehungsweise ein Teller oder dort ist ein tellerförmiges Mittel angeordnet, der beziehungsweise das die Kraft, die auf das erste Federmittel wirkt, aufnimmt und/oder abgibt. Bevorzugt ist das erste Federmittel in einer Führung der Hubaufnahme angeordnet, die das erste Federmittel oberseitig und zumindest teilweise randseitig umschließt. Bevorzugt ist die Führung im Verhältnis zum übrigen Teil der Hubaufnahme dünnwandig ausgebildet. Das erste Federmittel ist bevorzugt rechtwinklig zur Mittellängsachse z durch die Führung der Hubaufnahme des Gehäuses im Wesentlichen in seiner Position gehalten.

Bevorzugt ist das erste Federmittel mittels hydraulischer und/oder mechanischer Betätigung in Richtung der Mittellängsachse z des Gehäuses spannbar und/oder entspannbar ausgebildet. Das erste Federmittel ist bevorzugt eine Rückstellfeder. Sobald eine Kraft F₂ beziehungsweise ein Druck auf die Hubaufnahme ausgeübt wird, wird das erste Federmittel bevorzugt über die Mittellängsachse z gespannt. Das erste Federmittel, das bevorzugt eine Rückstellfeder ist, schiebt, nachdem beispielsweise die Zufuhr einer bevorzugten Hydraulikflüssigkeit gestoppt ist, zumindest die Hubaufnahme zurück in seine Ausgangsposition. Dies bedeutet, dass die Hubaufnahme, die bevorzugt über die Mittellängsachse z verfährt, nach oben geschoben wird und den Hülsenhubraum schließt. Wird die bevorzugte Hydraulikflüssigkeit eingesetzt, so wird diese dabei aus dem Hülsenhubraum gepresst.

Bevorzugt weist das Gehäuse der Druckeinheit am ersten unteren Endbereich mindestens ein Führungsstück auf. Das Führungsstück ist bevorzugt ein starres Element, durch das oder an welchem entlang das Druckteil der Hubaufnahme ausgebildet, geführt wird. Bevorzugt ist das Führungsstück des Gehäuses die Mittellängsachse z umlaufend ausgebildet. Vorzugsweise weist das Führungsstück des Gehäuses mindestens eine Druckteilausnehmung bevorzugt so viele Druckteilausnehmungen wie Druckteile vorgesehen sind, auf. Die Druckteilausnehmung ist bevorzugt eine in Richtung der Mittellängsachse z das Führungsstück durchdringende Ausnehmung. Weiter bevorzugt ist die Druckteilausnehmung eine im Wesentlichen gekrümmte und/oder längliche, dem Druckteil angepasste, Durchdringung des Führungsstücks. Vorzugsweise weist das Führungsstück auf einer Oberseite eine Fläche zur Auflage für das mindestens eine erste Führungsmittel auf. Weiter bevorzugt weist das Führungsstück auf der Oberseite einen Anschlag für einen Zylinderstift eines Überhubventils auf.

Bevorzugt weist das Befestigungssystem als Sicherheitselement mindestens ein Überhubventil und bevorzugt jeweils einen oder mehrere Zylinderstifte auf. Weiter bevorzugt weist die Druckeinheit des Befestigungssystems das mindestens eine Überhubventil auf. Das Überhubventil ist bevorzugt zwischen dem ersten oberen Endbereich der Druckeinheit und dem Führungsstück auf beziehungsweise in der Hubaufnahme angeordnet. Sobald eine Kraft F₂ beziehungsweise ein Druck auf die Hubaufnahme ausgeübt wird, wird das Überhubventil bevorzugt gemeinsam mit dem mindestens einen Druckteil der Hubaufnahme in Richtung der einsetzbaren Konushülse bewegt. Weiter bevorzugt greift das Überhubventil nicht wie das Druckteil durch die Druckteilausnehmung des Führungsstücks, sondern schlägt auf der Oberseite des Führungsstücks mit dem mindestens einen Zylinderstift an, um eine Überhubfahrt zu verhindern. Vorzugsweise weist der Zylinderstift eine verschließbare Öffnung, beispielsweise mit einer Art Kugel verschlossen, auf, die sich bei Kontakt mit der Oberseite des Führungsstücks öffnet, beispielsweise bei Vorsehung einer Kugelschließung durch seitliches wegschieben derselben, so dass die Hydraulikflüssigkeit austritt und der Druck verringert wird. Mit dem Überhubventil ist die Überhubfahrt auch bei mutwilliger Fehlbedienung unmöglich, was eine Zerstörung der Dichtungen des Befestigungssystems verhindert.

Erfindungsgemäß ist die Hubaufnahme der Druckeinheit im Gehäuse derart angeordnet, dass die Hubaufnahme mittels hydraulischer und/oder mechanischer Betätigung in Richtung der Mittellängsachse z verfahrbar ist und über das dieser zugeordneter Druckteil oder unmittelbar eine Kraft F₂ auf die einsetzbare Konushülse ausübt. In einer Ausführungsform weist die Hubaufnahme der Druckeinheit bevorzugt kein Druckteil und weiter bevorzugt kein Führungsstück auf. Die Hubaufnahme wirkt unmittelbar mit der Druckfläche die Kraft F₂ auf die einsetzbare Konushülse aus. Bevorzugt ist mit Ausüben der Kraft F₂ auf die einsetzbare Konushülse die radiale Druckraft F_{2,r} auf eine einsetzbares Hohlkörperelement übertragbar.

Erfindungsgemäß weist das Befestigungssystem die Zugeinheit auf. Bevorzugt umfasst die Zugeinheit mindestens ein Gehäuse mit einem zweiten oberen Endbereich und einem zweiten unteren Endbereich und mindestens eine im Gehäuse angeordnete Zugvorrichtung, wobei die Zugvorrichtung mindestens ein Innengewinde und eine zweite Ausnehmung umfasst, die in Richtung der Mittellängsachse z des Gehäuses im Wesentlichen zylindrisch und nach unten offen ausgebildet ist.

In einer bevorzugten Ausführungsform, in der die Zugeinheit im Wesentlichen oberhalb der Druckeinheit angeordnet ist, überschneiden sich weiter bevorzugt der erste obere Endbereich der Druckeinheit und der zweite untere Endbereich der Zugeinheit. Die bevorzugte Zugvorrichtung der Zugeinheit, die im Gehäuse angeordnet ist, erstreckt sich im Wesentlichen rotationssymmetrisch um eine Mittellängsachse z, die für das Gehäuse der Zugeinheit und das Gehäuse der Druckeinheit zusammenfällt, mithin identisch ist. Die erste Ausnehmung der Druckeinheit und die zweite Ausnehmung der Zugeinheit fallen bevorzugt zusammen und bilden eine gemeinsame Ausnehmung im Gehäuse bei einer einteiligen Ausgestaltung des erfindungsgemäßen Befestigungssystems. Weiter bevorzugt ist die Zugvorrichtung mit einem unteren Ende näher zum ersten unteren Endbereich der Druckeinheit angeordnet als zumindest der Hülsenhubraum. Die Zugvorrichtung ist besonders bevorzugt in Richtung der Mittellängsachse z verfahrbar.

Bevorzugt ist die Zugvorrichtung der Zugeinheit als Zuganker ausgebildet. Weiter bevorzugt ist die Zugvorrichtung als Kolben ausgebildet. Besonders bevorzugt ist die Zugvorrichtung als Tauchmutter ausgebildet. Bevorzugt unterscheidet sich der Zuganker vom Kolben und der Tauchmutter dahingehend, dass der Zuganker einen Gewindebolzen seitlich über ein bevorzugtes Innengewinde greift und oberhalb des anordenbaren Gewindebolzens einen massiven Körper aus insbesondere Vollmaterial aufweist. Dem gegenüber greift der Kolben und die Tauchmutter einen anordenbaren Gewindebolzen lediglich seitlich über ein Innengewinde und bilden jeweils einen Hohlzylinder, der nach oben hin offen ist.

Der Zuganker ist im Gehäuse derart angeordnet, dass er einen im Gehäuse anordenbaren Gewindebolzen randseitig greift. Das Greifen des anordenbaren Gewindebolzens geschieht bevorzugt über ein Innengewinde des Zugankers und ein Außengewinde des Gewindebolzens. Der Gewindebolzen ist bevorzugt durch die nach unten offene Ausbildung des Gehäuses in der zweiten Ausnehmung angeordnet. Oberhalb des anordenbaren Gewindebolzens, der randseitig vom Zuganker gegriffen wird, weist der Zuganker bevorzugt den massiven Körper auf. Bevorzugt ist der massive Körper im Wesentlichen aus Vollmaterial und erstreckt sich bevorzugt bis zum zweiten oberen Endbereich des Gehäuses.

Der Kolben weist bevorzugt ein Innengewinde auf und ist im Gehäuse derart angeordnet, dass er einen im Gehäuse anordenbaren Gewindebolzen randseitig wie der Zuganker greift. Das Gehäuse umschließt den Kolben zumindest seitlich und bevorzugt teilweise oberseitig. Der Kolben weist im Wesentlichen die Form eines Hohlzylinders auf.

Die Tauchmutter ist in etwa wie der Kolben gebildet. Bevorzugt ist die Tauchmutter derart im Gehäuse angeordnet, dass sie in Richtung der Mittellängsachse z und weiter bevorzugt in Richtung des zweiten oberen Endbereiches entnehmbar ist. Bevorzugt ist eine Mehrzahl von Tauchmuttern vorgesehen, die bevorzugt unterschiedliche Gewinde aufweisen. Mit der entnehmbaren Anordnung der Tauchmutter im Gehäuse ist damit ermöglicht, dass je nach Gegebenheit eine Tauchmutter mit dem gewünschten Gewinde gewählt werden kann. Vorzugsweise liegt die Tauchmutter nicht unmittelbar an einem Hubraum mit entsprechenden Dichtungen an beziehungsweise auf. Bevorzugt ist zwischen dem Hubraum und der Tauchmutter ein zwischengeordnetes Element vorgesehen, das den Hubraum abdichtet und die Tauchmutter somit erleichtert entnommen werden kann.

In einer bevorzugten Ausführungsform, in der die Zugeinheit im Wesentlichen oberhalb der Druckeinheit angeordnet ist, sind die erste Ausnehmung und die zweite Ausnehmung miteinander verbunden und bilden einen gemeinsamen Innenraum. Der gemeinsame Innenraum ist dergestalt, dass Raum für eine zu erzeugende Schraubverbindung gegeben ist.

Bevorzugt umfasst die Zugeinheit am zweiten oberen Endbereich mindestens eine Federeinheit, die mindestens ein zweites Federmittel aufweist, wobei das zweite Federmittel mittels hydraulischer und/oder mechanischer Betätigung in Richtung der Mittellängsachse z spannbar und entspannbar ausgebildet ist. Bevorzugt ist das mindestens eine zweite Federmittel mindestens eine Ringfeder und weiter bevorzugt eine Tellerfeder. Bevorzugt ist die Federeinheit oberseitig mit einer Federkappe des Gehäuses verbunden beziehungsweise bevorzugt liegt das zweite Federmittel mit einer zweiten oberen Federfläche des zweiten Federmittels an einer Innenseite der Federkappe an. Die Federkappe ist bevorzugt starr ausgebildet und hält das zweite Federmittel der Federeinheit in Richtung der Mittellängsachse z nach oben hin in seiner Position.

In einer bevorzugten Ausführungsform ist an einer zweiten unteren Federfläche der zweiten Federeinheit ein Federdruckstück angeordnet, das im Wesentlichen der Kraftübertragung an das zweite Federmittel dient. Bevorzugt ist das Federdruckstück von der Federeinheit umfasst.

Vorzugsweise liegt die Federeinheit unterseitig zumindest auf Teilen der Zugeinheit auf und/oder ist mit diesen verbunden. Bevorzugt liegt die Federeinheit auf mindestens einer oberen Mutter, und/oder auf mindestens einer oberen Mutterführung auf, wobei letztere Ausführungsform bevorzugt ist. Vorzugsweise liegt die Federeinheit mit der zweiten unteren Federfläche des zweiten Federmittels auf der oberen Mutter und weiter bevorzugt auf der oberen Mutterführung auf. In einer bevorzugten Ausführungsform liegt das Federdruckstück auf der oberen Mutter, und besonders bevorzugt auf der oberen Mutterführung auf.

In einer besonders bevorzugten Ausführungsform sind die Federeinheit der Zugeinheit und die Zugvorrichtung zusammenwirkbar ausgebildet. Bevorzugt stehen die Federeinheit und die Zugvorrichtung in einer Wechselwirkung. Sobald sich die Zugvorrichtung hebt beziehungsweise in Richtung der Mittellängsachse z nach oben bewegt, wird mindestens das zweite Federmittel der Federeinheit elastisch zusammen gedrückt. Die Zugvorrichtung senkt sich, sobald sich das zweite Federmittel der Federeinheit entspannt.

Bevorzugt umfasst die Zugeinheit mindestens einen Hubraum und mindestens eine dem Hubraum zugeordnete Dichtung. Weiter bevorzugt sind jedem Hubraum mindestens zwei Dichtungen zugeordnet. Bevorzugt ist der Hubraum wie der Hülsenhubraum in seiner Größe und seinem Volumen variabel. In einer bevorzugten Ausführungsform, in der Hubraum im Wesentlichen rotationssymmetrisch um die Mittellängsachse z ausgebildet ist, ist die Dichtung bevorzugt als eine Ringdichtung ausgebildet.

In einer Ausführungsform umfasst die Zugeinheit mindestens die obere Mutter und/oder mindestens eine untere Mutter, wobei die Zugvorrichtung über ein Außengewinde mit der oberen Mutter und/oder der unteren Mutter verbunden ist. Bevorzugt ist das Außengewinde der Zugvorrichtung und das Innengewinde der oberen und/oder unteren Mutter ein Feingewinde. Die Federeinheit der Zugeinheit liegt bevorzugt zumindest teilweise auf der oberen Mutter auf oder ist mit dieser verbunden. Weiter bevorzugt liegt die Federeinheit zumindest teilweise auf der oberen Mutterführung auf oder ist mit dieser verbunden.

Bevorzugt umfasst die Zugeinheit mindestens die obere Mutterführung und/oder mindestens eine untere Mutterführung, auf der jeweils eine der oberen Muttern und/oder eine der unteren Muttern aufliegt. Weiter bevorzugt liegen die obere Mutter auf der oberen Mutterführung und die untere Mutter auf der unteren Mutterführung auf. Bevorzugt bildet die obere und/oder untere Mutterführung mit einer Unterseite eine Deckenfläche des Hubraums der Zugvorrichtung. Sobald eine Hydraulikflüssigkeit in den Hubraum gelangt beziehungsweise in diesen hinein gepresst wird, hebt sich die Deckelfläche und somit die obere und/oder die untere Mutterführung. Weiter bevorzugt hebt sich gemeinsam mit der oberen und/oder unteren Mutterführung auch die auf der Mutterführung aufliegende obere und/oder untere Mutter mit nach oben, sobald sich das Volumen des Hubraums vergrößert. Besonders bevorzugt weisen die obere und/oder die untere Mutterführung auf einer Oberseite eine Fläche mit einem Gefälle in Richtung der Zugvorrichtung auf. Die obere und/oder die untere Mutter weisen eine auf dem Gefälle aufliegende entsprechende Steigung in Richtung der Zugvorrichtung auf. Mit dem bevorzugten Gefälle der oberen und/oder unteren Mutterführung wird die obere und/oder untere Mutter nach der Volumenzunahme des Hubraums zum Einen nach oben in Richtung des zweiten oberen Endbereiches der Zugeinheit geschobene und zum Anderen auf die Mittellängsachse z zu. Die Zugvorrichtung, die über das Gewinde mit der oberen und/oder unteren Mutter verbunden ist, wird mit nach oben geschoben. Des Weiteren wird vorteilhafterweise die Zugvorrichtung durch die bevorzugte Gefällebauweise der Mutterführung rechtwinklig zur Mittellängsachse z stabilisiert, so dass sie spielfreier in Richtung der Mittellängsachse z verfahren kann.

Im Wesentlichen zeitgleich zum Hub beziehungsweise der Volumenzunahme des Hubraums spannt sich bevorzugt das zweite Federmittel der Federeinheit. Sobald eine Hydraulikflüssigkeitszufuhr gestoppt ist und der Druck geringer als die Federkraft des gespannten zweiten Federmittels ist, entspannt sich das Federmittel wieder und presst die Hydraulikflüssigkeit wieder aus dem Hubraum, der in seinem Volumen abnimmt.

Die erfindungsgemäße Schraubverbindung, hergestellt mit dem erfindungsgemäßen, vorstehend beschriebenem Befestigungssystem, umfasst mindestens eine Mutter, mindestens eine Konushülse und mindestens einen Gewindebolzen, wobei der Gewindebolzen in einem ungelängten Zustand einen ersten Bolzen-Gewindedurchmesser D_{B,alt} und in einem gelängten Zustand einen zweiten Bolzen-Gewindedurchmesser D_{B,neu} mit einer veränderten Bolzen-Gewindegeometrie aufweist. Die Mutter umfasst eine Innenseite mit einem Innengewinde, eine Außenseite, eine Bodenfläche und eine der Bodenfläche gegenüberliegende Kopffläche. Des Weiteren weist die Mutter in einem ungepressten Zustand einen ersten Mutter-Gewindedurchmesser D_{M,alt} mit einem im Wesentlichen der veränderten Bolzen-Gewindegeometrie mit dem zweiten Bolzen-Gewindedurchmesser D_{B,neu} angepassten Gewinde und in einem gepressten Zustand einen zweiten Mutter-Gewindedurchmesser D_{M,neu} auf. Die Außenseite ist konusförmig ausgebildet. Die Einschnürung der Konizität verläuft von der Bodenfläche bis zu der Kopffläche oder ausgehend von einem Flansch, den die Mutter an der Bodenfläche aufweist, bis zu der Kopffläche.

In der vorliegenden Erfindung sind die Bolzen-Gewindedurchmesser als Außendurchmesser des Gewindes definiert. Des Weiteren sind die Mutter-Gewindedurchmesser in der vorliegenden Erfindung als Gewinde-Nenndurchmesser definiert.

Der erste Bolzen-Gewindedurchmesser D_{B,alt} des Bolzens und dessen ungelängter Zustand ist als Ausgangslage des Bolzens zu verstehen, bevor er von einer Zugeinheit des Befestigungssystems gelängt wird. Das Längen geschieht mittels der Zugvorrichtung, bevorzugt einem Zuganker oder einer Tauchmutter. Der Bolzen wird mit seiner ungelängten und ursprünglichen Bolzen-Gewindegeometrie von der Zugeinheit gezogen beziehungsweise gelängt. Der resultierende zweite Bolzen-Gewindedurchmesser D_{B,neu} ist geringer als der erste Bolzen-Gewindedurchmesser D_{B,alt}. Die veränderte Bolzen-Gewindegeometrie unterscheidet sich im Wesentlichen von der ursprünglichen Bolzen-Gewindegeometrie dadurch, dass die Gewindesteigung steiler geworden ist.

Der erste Mutter-Gewindedurchmesser D_{M,alt} der Mutter und dessen ungepresster Zustand ist als Ausgangslage der Mutter zu verstehen, bevor diese von dem Befestigungssystem beziehungsweise von einer Druckeinheit des Befestigungssystems gepresst wird. Das Pressen der Mutter geschieht mittels der Konushülse, die mit einer entsprechenden Konizität unter Druck von einer Druckeinheit auf die Mutter, die ebenfalls eine Konizität aufweist, geschoben wird. Die Konushülse weist eine Konizität auf einer Konushülseninnenseite und die Mutter auf einer Außenseite auf. Die Konizitäten der Konushülseninnenseite und der Außenseite der Mutter entsprechen sich im Wesentlichen, so dass die entsprechenden Konusflächen aneinander anliegen. Bevorzugt entspricht der zweite Mutter-Gewindedurchmesser D_{M,neu} des gepressten Zustandes der Mutter im Wesentlichen dem zweiten Bolzen-Gewindedurchmessers D_{B,neu} des gelängten Zustandes des Gewindebolzens. Bevorzugt ist ein gewisses Spiel zwischen dem Muttergewinde und dem Gewindebolzengewinde vorhanden. Die Mutter mit dem zweiten Mutter-Gewindedurchmesser D_{M,neu} kann nach Längung des Gewindebolzens aufgrund einem dann ermittelten zweiten Bolzen-Gewindedurchmessers D_{B,neu} erstellt werden durch entsprechende Schneidung eines Gewindes, oder aber vorgefertigt zur Verfügung gestellt sein aufgrund der Kenntnisse über die Reichweite der erfolgten Längung in Abhängigkeit von dem ersten Bolzen-Gewindedurchmesser D_{B,alt} , was z.B. durch gegenständliche oder elektronische Tabellen erfasst und wiedergegeben sein kann.

Bevorzugt weist die Konushülse der Schraubverbindung eine Kopffläche auf, über die sie mit der Hubaufnahme zusammenwirkbar ausgestaltet ist. Bevorzugt umfasst die Hubaufnahme das Druckteil, wobei die Druckfläche im Bereich des Druckteils angeordnet ist. Unter dem Begriff "zusammenwirken" ist zu verstehen, dass die Hubaufnahme beziehungsweise das Druckteil der Hubaufnahme über die Druckfläche eine Kraft in bevorzugt der Richtung einer Mittellängsachse z' der Mutter auf die Konushülse ausübt.

Vorzugsweise weist die Konushülse ausgehend von einer Konushülsenaußenseite in Richtung der Konushülseninnenseite einen Druckanschluss auf. Bevorzugt ist der Druckanschluss eine Ausnehmung durch die Konushülse. Weiter bevorzugt erstreckt sich der Druckanschluss ausgehend von der Konushülsenaußenseite rechtwinklig auf die Mittellängsachse z' zu. Durch den Druckanschluss gelangt ein Fluid an die Mutter und ermöglicht durch eine Druckerhöhung des Fluides ein Trennen der Konushülse von der Mutter. Vorzugsweise strömt das Fluid in einen Zwischenraum zwischen Mutter und Konushülse und löst eine selbsthemmende Verbindung in einem Kontaktbereich dieser.

Die erfindungsgemäße Mutter zum Einsatz in einer Schraubverbindung umfasst eine Innenseite mit einem Innengewinde, eine Außenseite, eine Bodenfläche und eine der Bodenfläche gegenüberliegende Kopffläche, wobei die Außenseite konusförmig ausgebildet ist, und die Einschnürung der Konizität von der Bodenfläche der Mutter bis zu der Kopffläche der Mutter verläuft oder ausgehend von einem Flansch, den die Mutter an der Bodenfläche aufweist, bis zu der Kopffläche verläuft. Außerdem weist eine Seitenwand der Mutter mindestens eine Längsausnehmung auf, die die Seitenwand der Mutter in Richtung einer Mittelängsachse z' der Mutter mindestens über eine Teillänge und in Richtung einer x-Achse, rechtwinklig zur Mittellängsachse z', vollständig durchdringt.

Bevorzugt ist eine Seitenwand der Mutter zylindrisch und weiter bevorzugt mit der Konizität ausgebildet. Weiter bevorzugt verläuft die Konizität nicht vollständig über die gesamte Außenseite der Mutter. In der vorliegenden Erfindung beschreibt der Begriff "Einschnürung" einen geringer werdenden Umfang in einer definierten Richtung. Die Kopffläche der Mutter weist im Verhältnis zur Bodenfläche bevorzugt einen kleineren Umfang auf. Ausgehend von der Mittellängsachse z' weist die Mutter über ihre Außenseite eine Steigung unter einem Winkel α auf. Der Winkel α liegt bevorzugt in einem Bereich von etwa 0,2° bis etwa 5°, weiter bevorzugt in einem Bereich von etwa 0,7° bis etwa 3°, und besonders bevorzugt in einem Bereich von etwa 1,5° bis etwa 2,5°. Bevorzugt umfasst die Mutter weiterhin einen Flansch, der der Bodenfläche der Seitenwand der Mutter zugeordnet ist. Der Flansch erstreckt sich bevorzugt von der Seitenwand der Mutter ausgehend entfernend von der Mittellängsachse z'. Der Flansch bildet im Wesentlichen eine Verstärkung bzw. eine Verbreiterung der Mutter im Bereich der Bodenfläche der Seitenwand. Bevorzugt weist der Flansch keine Konizität an seiner Außenseite von der Bodenfläche der Mutter in Richtung der Kopffläche der Mutter auf. Der Flansch weist bevorzugt auf einer Oberseite einen Anschlag für eine anordenbare Konushülse, insbesondere im gepressten Zustand, auf. Weiter bevorzugt nähert sich die Konushülse, um den gepressten Zustand zu erreichen, dem Anschlag des Flansches lediglich an und stoppt seine Bewegung vor einem Inkontaktkommen mit dem Anschlag. Eine Unterfläche des Flansches schließt bevorzugt eben mit der Bodenfläche der Seitenwand der Mutter ab.

Vorzugsweise weist die Seitenwand der Mutter entfernend von einer anordenbaren Konushülse an ihrer Innenseite mindestens einen rund umlaufenden Absatz, weiter bevorzugt mindestens eine Kantenabrundung, und besonders bevorzugt mindestens eine Fase, auf. Hierdurch erweitert sich ein Innendurchmesser der Mutter, bevorzugt bei Ausbildung einer unteren Fase in Richtung auf die Bodenfläche der Seitenwand der Mutter hin. Es kann aber auch eine Erweiterung des Innendurchmessers in Richtung auf die Kopffläche der Seitenwand der Mutter hin erfolgen, wenn eine obere Fase vorgesehen ist. Besonders bevorzugt weist die Seitenwand der Mutter angrenzend an die Bodenfläche auf ihrer Innenseite über eine gewisse Teillänge der Seitenwand einen zunächst gleichbleibenden Durchmesser und daran anschließend eine untere Fase auf, wobei sich im Bereich der unteren Fase der Innendurchmesser in Richtung auf die Kopffläche der Mutter zu verringert. An die untere Fase anschließend ist ein Bereich, der bevorzugt bis angrenzend zur Kopffläche der Seitenwand der Mutter ausgebildet ist, ausgebildet, in dem der Gewindegang des Innengewindes in voller Tiefe ausgebildet ist. Alternativ ist der Gewindegang des Innengewindes ohne eine Fase o.Ä. in voller Tiefe ausgebildet. Im Bereich der unteren Fase oder einer Kantenabrundung kann auch ein Gewindegang vorhanden sein, dann aber mit abnehmender Tiefe auslaufend auf die Bodenfläche der Seitenwand der Mutter hin. Ein ausgehend von der Bodenfläche der Seitenwand der Mutter angeordneter Bereich mit gleichbleibendem Innendurchmesser weist bevorzugt keinen Gewindegang des Innengewindes auf. Zusätzlich kann eine obere Fase etc. vorgesehen sein, die an die Kopffläche der Seitenwand der Mutter bevorzugt angrenzt.

Die Durchdringung der Längsausnehmung durch die Seitenwand erstreckt sich bevorzugt von der Kopffläche bis zu der Bodenfläche der Mutter. Weiter bevorzugt weist die Mutter eine Mehrzahl von Längsausnehmungen auf. Bevorzugt weist die Seitenwand der Mutter die Längsausnehmung oder die Längsausnehmungen in Richtung der Mittellängsachse z' von der Kopffläche der Mutter bis in etwa zur Oberseite des Flansches auf. Bevorzugt ist der Flansch im Wesentlichen nicht von einer Längsausnehmung durchdrungen. In einer bevorzugten Ausführungsform halten der Flansch und der Bereich der Seitenwand, der seitlich vom Flansch umschlossen ist, die Mutter zu einem Element zusammen. Alternativ weist der Flansch ebenfalls die mindestens eine Längsausnehmung auf. In einer Ausführungsform mit einer Mehrzahl von Längsausnehmungen, die die Seitenwand und den Flansch durchdringen, besteht die Mutter aus mehreren Teilelementen. Die Seitenwand der Mutter ist in einer bevorzugten Ausführungsform in Richtung der x-Achse vollständig und in Richtung der Mittellängsachse z' zumindest über eine Teillänge durchdrungen. In einer alterativen Ausführungsform, in der die Mutter keinen Flansch aufweist, weist die Seitenwand der Mutter bevorzugt eine vollständige Durchdringung in Richtung der Mittellängsachse z' auf. Ist ein rund umlaufender Absatz, weiter bevorzugt eine Kantenabrundung, und besonders bevorzugt eine Fase, an der Innenseite der Seitenwand der Mutter nicht angrenzend zur Kopffläche angeordnet, so ist bevorzugt die mindestens eine Längsausnehmung über eine Teillänge des Absatzes, der Kantenabrundung oder der Fase, bevorzugt nur zu einem geringen Teil, weiter bevorzugt nicht über eine Teillänge derselben, ausgebildet. Die mindestens eine Längsausnehmung ist bevorzugt im Bereich des Innengewindes der Mutter, das an der Innenseite der Seitenwand der Mutter ausgebildet ist, angeordnet. Ein an die Bodenfläche oder die Kopffläche der Seitenwand angrenzender Innenbereich, bevorzugt mit einem größeren Innendurchmesser als im Bereich der Innengewindes, weist im Wesentlichen keinen Gewindegang des Innengewindes auf. Ein an die Bodenfläche oder die Kopffläche der Seitenwand angrenzender Innenbereich, bevorzugt mit einem größeren Innendurchmesser als im Bereich eines Innengewindes, weist bevorzugt im Wesentlichen nicht die mindestens eine Längsausnehmung auf, allenfalls nur über eine kleine Teillänge in Richtung der Mittellängsachse z'. Bevorzugt ist die mindestens eine Längsausnehmung zur Kopffläche und/oder Bodenfläche, weiter bevorzugt zur Kopffläche, der Seitenwand der Mutter hin offen ausgebildet. In dieser Ausführungsform kann die mindestens eine Längsausnehmung als Schlitz in der Seitenwand der Mutter angesprochen werden. Es kann aber auch vorgesehen sein, dass die mindestens eine Längsausnehmung zur Kopffläche und zur Bodenfläche der Seitenwand der Mutter hin geschlossen ist. Die mindestens eine Längsausnehmung kann dann als Längsloch in der Seitenwand der Mutter angesprochen werden.

Die erfindungsgemäße Mutter-Konushülsen-Kombination zum Einsatz in einer Schraubverbindung umfasst eine erfindungsgemäße Mutter und eine Konushülse, wobei die Konushülse auf mindestens einer Konushülseninnenseite in etwa entsprechend einer Seitenwand der Mutter ausgebildet ist. Bevorzugt ist die Konushülse ein ringartiges Element mit mindestens einer Konizität, bevorzugt einer gleichmäßigen Konizität über die gesamte Konushülseninnenseite. Weiter bevorzugt weist die Mutter eine Konizität, bevorzugt eine gleichmäßige Konizität über die gesamte Fläche der Außenseite, auf der Außenseite der Seitenwand auf. In einer alternativen Ausführungsform weist die Mutter nur über Teilbereiche der Außenseite eine Konizität auf. Bevorzugt ist es durch eine freie Gestaltungsmöglichkeit der Konushülsenwandstärke der Konushülse möglich, unterschiedliche Verpressungsgrade der Mutter durch die Konushülse auf ein anordenbares zylindrischen Element, insbesondere einen Gewindebolzen, zu erzeugen und je nach Anwendungsfall radiale Verformungen zu reduzieren, zu verlagern, zu erhöhen beziehungsweise zu eliminieren.

Vorzugsweise bildet die Außenseite der Mutter im Wesentlichen eine Positivform der Konushülseninnenseite. Bevorzugt weist die Mutter eine Kopffläche und eine Bodenfläche auf, und ist weiter bevorzugt wie oben beschrieben ausgebildet. Die Kopffläche der Mutter bildet bevorzugt mit einer Kopffläche der Konushülse eine im Wesentlichen gleiche beziehungsweise ebene Fläche. Die Kopffläche der Mutter kann jedoch auch unterhalb oder oberhalb der Kopffläche der Konushülse vor Montage beziehungsweise der Pressung angeordnet sein. Des Weiteren liegt bevorzugt die Konushülse mit der Konushülseninnenseite auf der Außenseite der Mutter vollständig auf.

Das erfindungsgemäße Verfahren dient zur Erstellung mindestens einer Schraubverbindung mit einem erfindungsgemäßen Befestigungssystem, wobei eine Druckeinheit des Befestigungssystems und eine Konushülse eine Verpressung einer Mutter mit einem Gewindebolzen bewirken. Bevorzugt weist die Mutter einen ersten Mutter-Gewindedurchmesser D_{M,alt} auf. Der erste Mutter-Gewindedurchmesser D_{M,alt} der Mutter im ungepressten Zustand ist als Ausgangslage der Mutter zu verstehen. Die Mutter ist mit ihrem Innengewinde und bevorzugt einem gewissen Flankenspiel mit dem Gewindebolzen verschraubt.

Bevorzugt wird durch eine Hubaufnahme der Druckeinheit oder ein Druckteil der Hubaufnahme die Konushülse über eine Konushülseninnenseite, die auf einer Außenseite der Mutter im Wesentlichen anliegt, in Richtung einer Mittellängsachse z, z' auf die Mutter der Schraubverbindung aufgeschoben. Das Aufschieben bewirkt eine Bewegung der Konushülse auf die Mutter zu, welche durch die Konizität beider bedingt ist. Die Konushülse, schiebt sich über die ansteigende Außenseite der Mutter in Richtung der Mittellängsachse z, z' und bewirkt eine radiale Kraft F_{2,r} auf die Mutter. Bevorzugt ist die Konushülse als starr und weiter bevorzugt im Verhältnis zur Mutter als im Wesentlichen weniger nachgiebig ausgebildet. Bevorzugt ist die Mutter als nachgiebig ausgebildet. Die Mutter nimmt in ihrem Umfang über die Außenseite bei der Verpressung ab.

In einer Ausführungsform erfolgt die Abnahme des Umfangs einer Seitenwand der Mutter materialbedingt, wobei das Material gepresst wird. In einer alternativen und bevorzugten Ausführungsform weist die Mutter mindestens eine Längsausnehmung auf, die die Seitenwand der Mutter in Richtung der Mittelängsachse z, z' mindestens über eine Teillänge und in Richtung einer x-Achse, rechtwinklig zur Mittellängsachse z, z', vollständig durchdringt. Bevorzugt weist die mindestens eine Längsausnehmung der Mutter eine Breite B auf, die durch die Bewegung der Konushülse auf die Mutter verringert wird und gegebenenfalls schließt. Die Breite B erstreckt sich im Wesentlichen parallel zur Ebene der Kopffläche der Mutter.

Bevorzugt werden Muttergewindeflanken der Mutter, die gegenüberliegend zu Bolzengewindeflanken des Gewindebolzens angeordnet sind, auf die aufgeschoben, bis eine bevorzugte Teilanlage und besonders bevorzugt im Wesentlichen vollständige Anlage erzielt wird. Die Teilanlage ist bevorzugt bedingt durch die Anlage einer Bolzengewindeflanke an der gegenüberliegenden Muttergewindeflanke, während die jeweils andere Bolzen- und Muttergewindeflanke ein gewisses Spiel zwischen sich aufweisen. Bevorzugt ist die Bewegung der Muttergewindeflanken auf die Bolzengewindeflanken bedingt durch die Kraft F_{2,r}, die die radiale Kraftaufbringung auf die Außenseite der Mutter durch die Konushülse beziehungsweise durch die Konushülseninnenseite ist. Vorzugsweise ist die Bewegung der Muttergewindeflanken zusammenwirkend mit den Bolzengewindeflanken druck- und/oder formgesteuert. Der Begriff "druckgesteuert" bezogen auf die Gewindeflanken bedeutet, dass diese in einem ungepressten Zustand im Wesentlichen kein Flankenspiel aufweisen, jedoch ein Hohlraum zwischen einer maximalen Muttergewindetiefe und einem Bolzenkerndurchmesser gebildet ist. Mit Aufbringen der Kraft F_{2,r} verringert sich der Hohlraum durch bevorzugtes Verpressen, bis dieser sich bevorzugt nahezu und weiter bevorzugt vollständig schließt. Der Begriff "formgesteuert" bezogen auf die Gewindeflanken bedeutet, dass eine Muttergewindeflanke an einer Bolzengewindeflanke anliegt, wohingegen die jeweils andere Mutter- und Bolzengewindeflanke ein gewisses Spiel zwischen sich aufweisen. Mit Aufbringen der Kraft F_{2,r} verringert sich das Flankenspiel zwischen der Muttergewindeflanke und der Bolzengewindeflanke. Vorzugsweise werden die Muttergewindeflanke nach bevorzugt teilweisem Anliegen und besonders bevorzugt im Wesentlichen vollständigem Anliegen an die Bolzengewindeflanken mit den Bolzengewindeflanken wie beim "druckgesteuerten" Vorgang verpresst. Es erfolgt bevorzugt zumindest ein Formschluss zwischen den Muttergewindeflanken und den Bolzengewindeflanken. In einer besonderen Ausführungsform des Gewindes der Mutter ist durch radiales Schrumpfen - ausgelöst durch die axiale Kraft F₂ und die daraus resultierende radiale Kraft F_{2,r} - bei einseitiger Flankenanlage eine zusätzliche radiale Verpressung des Bolzens und des Bolzengewindegrundes erzeugt, was wiederum Druckeigenspannungen im Bolzengewinde erzeugt, welche wiederum die Dauerfestigkeit der Verbindung erhöhen (ähnlich einem kalt umgeformten Gewinde, wie bei einem Gewinderollprozess). Bevorzugt maximiert sich durch das Schließen des Flankenspiels auf Grund des Anliegens der Flanken die Reibfläche auf etwa 100 %, wodurch nahezu die maximale Haftreibung µ0 gegeben ist. Vorteilhafterweise kommt es selbst unter stärkeren dynamischen Belastungen wie beispielsweise Vibrationen nicht zu einem Lösen der druck- und/oder formgesteuerten Schraubverbindung.

Vorzugsweise wird durch eine Zugeinheit des Befestigungssystems der Gewindebolzen der Schraubverbindung in Richtung der Mittellängsachse z, z' mehrfach gelängt, bis dieser einen gelängten Zustand erreicht. Mit dem mehrfachen bzw. mehrmaligen Längen des Gewindebolzens wird dieser mehrfach vorgespannt. Das mehrfache bzw. mehrmalige Vorspannen geschieht, um ein sogenanntes Materialrelaxing vorwegzunehmen, welches am Einsatzort der Schraubverbindung bedingt durch gegebenenfalls der dynamischem Belastung oder witterungsbedingt entsteht. Damit erfolgt eine Vorkonditionierung des Materials des Gewindebolzens durch das mehrfache Längen desselben.

Weiter bevorzugt wird durch die Zugeinheit der Gewindebolzen mehrfach bis zu einer vorbestimmten Vorspannkraft gelängt. Mehrfaches Vorspannen bis zu einer vorbestimmten Vorspannkraft bewirkt, dass sogenannte Mikrosetzerscheinungen über die Zeit minimiert bis vollständig eliminiert werden.

Des Weiteren wird bevorzugt nachdem der Gewindebolzen den gelängten Zustand mit einer vorbestimmten Vorspannkraft erreicht hat, weiter bevorzugt nach einer Vorkonditionierung wie vorstehend beschrieben, die Mutter bis zu einer Unterlage festgezogen. Die Unterlage, bis zu der die Mutter festgezogen wird, ist bevorzugt ein einteiliges und weiter bevorzugt mehrteiliges systemexklusives Element, wie weiter oben in Zusammenhang mit dem erfindungsgemäßen Befestigungssystem beschrieben.

Erfindungsgemäß werden das mehrfache Längen des Gewindebolzens und das anschließende Festziehen der Mutter vor dem Aufpressen der Konushülse auf die Mutter durchgeführt.

Die Erfindung schlägt zudem die Verwendung eines erfindungsgemäßen Befestigungssystems zur Erstellung mindestens einer Schraubverbindung vor, wobei die Druckeinheit des Befestigungssystems und eine Konushülse eine Verpressung einer Mutter mit einem Gewindebolzen bewirken.

Weitere vorteilhafte Ausgestaltungen gehen aus den nachfolgenden Zeichnungen hervor. Gleiche Teile oder Teile mit gleicher Funktion können die gleichen Bezugszeichen aufweisen. Es zeigen:
- FIG. 1: eine erfindungsgemäße erste Ausführungsform eines Befestigungssystems für eine Schraubverbindung in einer seitlichen Schnittansicht I-I;
- FIG. 2: das Befestigungssystem gemäß FIG. 1 in einer Schnittansicht entlang dem Schnitt II-II;
- FIG. 3: ein Überhubventil einer Druckeinheit gemäß FIG. 2;
- FIG. 4: eine erfindungsgemäße zweite Ausführungsform eines Befestigungssystems für eine Schraubverbindung in einer Draufsicht;
- FIG. 5: das Befestigungssystem gemäß FIG. 4 in einer seitlichen Schnittansicht V-V;
- FIG. 6: eine erste Ausführungsform einer Mutter-Konushülsen-Kombination in einer perspektivischen Ansicht;
- FIG. 7: die Mutter-Konushülsen-Kombination aus FIG. 6 in einer Unteransicht;
- FIG. 8: eine zweite Ausführungsform einer Mutter-Konushülsen-Kombination in einer perspektivischen Ansicht;
- FIG. 8.1: die zweite Ausführungsform der Mutter-Konushülsen-Kombination in einer perspektivischen Unterseitenansicht;
- FIG. 9: eine Ausführungsform einer Schraubverbindung mit einer Konushülse mit einer Unterlage;
- FIG. 10.1: einen Gewindebolzen der Schraubverbindung in einer Seitenansicht mit vergrößerter Ansicht des Gewindegangs mit einer Unterlage aus FIG. 9 in einem ersten Verfahrensschritt;
- FIG. 10.2: den Gewindebolzen der Schraubverbindung in einer Seitenansicht mit vergrößerter Ansicht des Gewindegangs mit der Unterlage aus FIG. 9 in einem zweiten Verfahrensschritt
- FIG. 10.3: die Schraubverbindung in einer Schnittansicht mit der Unterlage aus FIG. 9 in einem dritten Verfahrensschritt
- FIG. 10.4: die Schraubverbindung in einer Seitenansicht mit vergrößerter Ansicht der Gewinde mit der Unterlage aus FIG. 9 im dritten Verfahrensschritt
- FIG. 10.5: die Schraubverbindung in einer Seitenansicht mit vergrößerter Ansicht der Gewinde mit der Unterlage aus FIG. 9 in einem vierten Verfahrensschritt
- FIG. 10.6: die Schraubverbindung in einer Schnittansicht mit vergrößerter Ansicht der Gewinde mit der Unterlage aus FIG. 9 im vierten Verfahrensschritt;
- FIG. 10.7: die Schraubverbindung in einer Schnittansicht mit vergrößerter der formgeschlossenen, verpressten Gewinde mit der Unterlage aus FIG. 9 in einem fünften Verfahrensschritt; und
- FIG. 11: die Schraubverbindung aus FIG. 9 mit einer Unterlage in einem montierten Zustand mit Konushülse auf einer Seite in einer Schnittansicht.

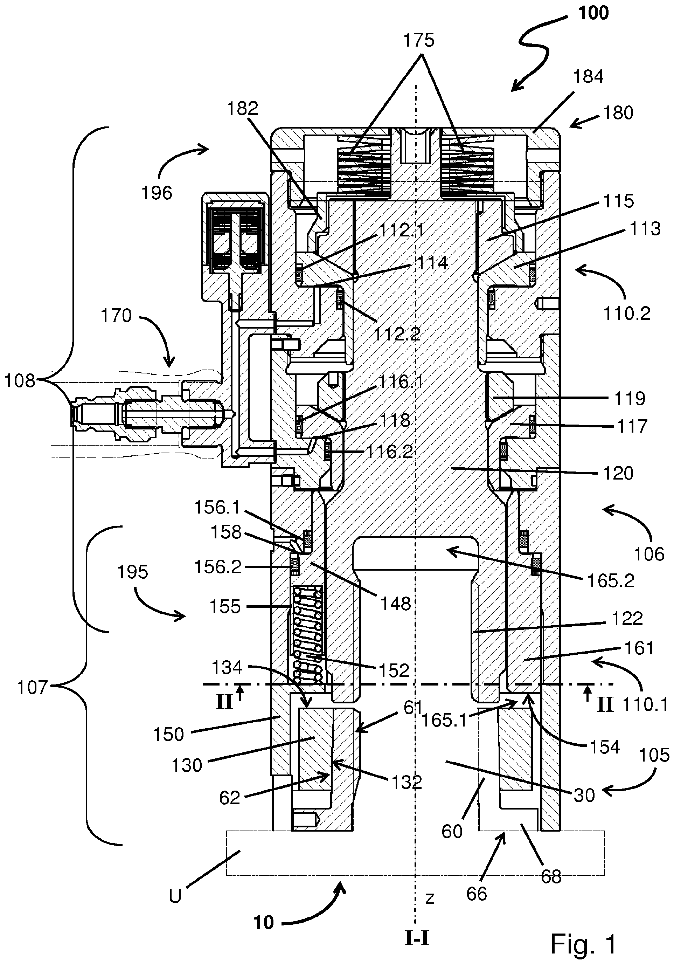

FIG. 1 zeigt eine erste, hydraulisch betätigbare Ausführungsform eines Befestigungssystems 100 für eine Schraubverbindung 10 in einer seitlichen Schnittansicht I-I umfassend mindestens eine Zugeinheit 108 und mindestens eine Druckeinheit 107, wobei die Zugeinheit 108 zu einem großen Teil oberhalb der Druckeinheit 107 angeordnet ist. Die Druckeinheit 107 umfasst ein Gehäuse 110.1 mit einem ersten oberen Endbereich 106 und einem ersten unteren Endbereich 105 mit einer ersten Ausnehmung 165.1, die nach unten offen ausgebildet ist. Die Zugeinheit 108 umfasst ein Gehäuse 110.2 mit einem zweiten oberen Endbereich 196 und einem zweiten unteren Endbereich 195. Das Gehäuse 110.1 der Druckeinheit und das Gehäuse 110.2 der Zugeinheit bilden ein gemeinsames Gehäuse 110, das das Befestigungssystem 100 im Wesentlichen randseitig und oberhalb umschließt. Das Befestigungssystem 100 ist auf einer systemexklusiven Unterlage U angebracht. Der erste untere Endbereich 105 der Druckeinheit 107 grenzt an die Unterlage U an. Die Gehäuse 110.1 und 110.2 sind übereinander angeordnet und miteinander verbunden als einteiliges Gehäuse ausgebildet.

Die Druckeinheit 107, in FIG. 1 in einer Geschlossenstellung dargestellt, umfasst am ersten oberen Endbereich 106 mindestens einen Hülsenhubraum 158 und mindestens eine dieser zugeordnete Hubaufnahme 148. Der Hülsenhubraum 158 der FIG. 1 ist in der Geschlossenstellung wiedergegeben, in der er keine Hydraulikflüssigkeit enthält. Der Hülsenhubraum 158 weist eine erste und eine zweite, als Ringdichtung ausgebildete Hubraumdichtung 156.1, 156.2 auf, wobei die erste Hubraumdichtung 156.1 seitlich und oberhalb in Richtung einer Mittellängsachse z des Gehäuses 110 am Hülsenhubraum 158 angeordnet ist. Die zweite Hubraumdichtung 156.2 ist seitlich unterhalb und entfernend von der Mittellängsachse z am Hülsenhubraum 148 angeordnet. Die Hubaufnahme 148 ist zum Teil unterhalb des Hülsenhubraums 158 und zum Teil daneben in Richtung der Mittellängsachse z angeordnet. Sobald sich der Hülsenhubraum mit einer Hydraulikflüssigkeit füllt, wird eine Kraft auf den Teil der Hubaufnahme 148, der unterhalb des Hülsenhubraums 158 angeordnet ist, ausgeübt.

Die Hubaufnahme 148 weist unterseitig und randseitig eine dünnwandige Führung 155 auf, in der ein erstes Federmittel 152 angeordnet ist. Über den Umfang der Druckeinheit 107 sind mehrere solcher erster Federmittel 152 angeordnet, beispielsweise zwei, drei, vier, fünf oder mehr. Die Führung 155 der Hubaufnahme 148 umschließt das erste Federmittel 152 oberseitig und zumindest teilweise randseitig. Das erste Federmittel 152 erstreckt sich mit seiner Längserstreckung in Richtung der Mittellängsachse z, in der das erste Federmittel 152 Zug- und/oder Druckkräfte aufnimmt. Das erste Federmittel 152 ist als Rückstellfeder ausgebildet. Die Hubaufnahme 148 und das erste Federmittel 152 sind in Richtung der Mittellängsachse z verfahrbar beziehungsweise spann- und entspannbar ausgebildet. Weiter weist das Gehäuse 110.1 der Druckeinheit 107 am ersten unteren Endbereich 105 ein Führungsstück 150 auf. Das Führungsstück 105 weist an einem oberen Ende eine oder mehrere Druckteilausnehmungen (FIG. 1 nicht zu entnehmen) auf. Die Anzahl der Druckteilausnehmungen entspricht einer Anzahl vorgesehener Druckteile 161. Die Druckteilausnehmung ist als eine gekrümmte und längliche Durchdringung durch das Führungsstück 150 ausgebildet. Das Druckteil 161 ist der Hubaufnahme 148 zugeordnet und gegenüberliegenden der Konushülse 130 angeordnet.

In der ersten Ausnehmung 165.1 des unteren Endbereiches 105 ist die Schraubverbindung 10 eingesetzt, die über die Mittellängsachse z des Gehäuses 110 im Wesentlichen rotationssystemmetrisch ausgebildet ist. Die Schraubverbindung 10 umfasst eine Mutter 60, eine Konushülse 130 und einen Gewindebolzen 30. Die Mutter 60 weist an einer Bodenfläche 66 einen Flansch 68 auf, mit dem die Mutter 60 auf der Unterlage U aufliegt. Die Mutter 60 ist über ein Innengewinde auf einer Innenseite 61 in Richtung der Mittellängsachse z mit dem Gewindebolzen 30 verbunden. Auf einer Außenseite 62 der Mutter 60, die eine der Innenseite 61 abgewandte Seite ist, weist die Mutter 60 eine Konizität auf. Die Konizität verläuft ausgehend vom Flansch 68 bis zu einer Kopffläche 67 der Mutter 60 und schnürt diese bedingt durch eine Durchmesserverringerung ein. Auf der Außenseite 62 der Mutter 60 ist die Konushülse 130 angeordnet. Die Konushülse 130 weist eine Konizität auf einer Konushülseninnenseite 132 auf. Die Konizität der Konushülse 130 entspricht in etwa der Steigung beziehungsweise der Durchmesserverringerung der Außenseite 62 der Mutter 60. Die Konushülse 130 weist eine Kopffläche 134 auf, die gegenüberliegend zu einer Druckfläche 154 der Hubaufnahme 148 im Bereich des Druckteils 161 angeordnet ist. Auf die Kopffläche 134 der Konushülse 130 übt die Hubaufnahme 148 der Druckeinheit 107 mit dem Druckteil 161 in Richtung der Mittellängsachse z eine Kraft F₂ aus.

Die Zugeinheit 108, in FIG. 1 in Geschlossenstellung dargestellt, also ohne Hydraulikflüssigkeit gezeigt, umfasst das Gehäuse 110.2 mit dem zweiten oberen Endbereich 196 und dem zweiten unteren Endbereich 195 und eine im Gehäuse 110.2 angeordnete Zugvorrichtung 120. Die Zugvorrichtung 120 umfasst ein Innengewinde 122 und eine zweite Ausnehmung 165.2, die in Richtung der Mittellängsachse z des Gehäuses 110.2 im Wesentlichen zylindrisch und nach unten offen ausgebildet ist. Die zweite Ausnehmung 165.2 bildet mit der ersten Ausnehmung 165.1 eine einheitliche Gesamtausnehmung, die rotationssymmetrisch und entlang der Mittellängsachse z ausgebildet ist. Die Zugvorrichtung 120 der Zugeinheit 108, die im Gehäuse 110.2 angeordnet ist, erstreckt sich im Wesentlichen rotationssymmetrisch um die Mittellängsachse z. Die Zugvorrichtung 120 ist derart ausgebildet, dass sie in Richtung der Mittellängsachse z verfahrbar ist. In dieser Ausführungsform ist die Zugvorrichtung 120 der Zugeinheit 108 als Zuganker ausgebildet, der im Gehäuse 110.2 derart angeordnet ist, dass er den im Gehäuse 110 angeordneten Gewindebolzen 30 der Schraubverbindung 130 randseitig über das Innengewinde 122 greift. Der Gewindebolzen 30 ist bevorzugt durch die nach unten offene Ausbildung des Gehäuses 110.1/110.2 in der zweiten Ausnehmung 165.2 angeordnet. Oberhalb des anordenbaren Gewindebolzens 30, der randseitig vom Zuganker gegriffen ist, weist der Zuganker einen massiven Körper auf. Die erste Ausnehmung 165.1 und die zweite Ausnehmung 165.2 sind miteinander verbunden und bilden einen gemeinsamen Innenraum. Der gemeinsame Innenraum ist dergestalt, dass Raum für eine in diesem anordenbare Schraubverbindung gegeben ist.

Des Weiteren umfasst die Zugeinheit 108 am zweiten oberen Endbereich 195 eine Federeinheit 180, die mindestens zwei zweite Federmittel 175 aufweist, wobei die zweiten Federmittel 175 mittels hydraulischer und/oder mechanischer Betätigung in Richtung der Mittellängsachse z spannbar und entspannbar ausgebildet sind. Die mindestens zwei zweiten Federmittel 175 sind als Tellerfedern ausgebildet. Oberseitig ist die Federeinheit 180 mit einer Federkappe 184 des Gehäuses 110.2 verbunden beziehungsweise bevorzugt liegen die zweiten Federmittel 175 an der Federkappe 184 an. Die Federkappe 184 ist starr ausgebildet und hält die zweiten Federmittel 175 der Federeinheit 180 in Richtung der Mittellängsachse z nach oben hin in ihrer Position. Unterhalb der zweiten Federmittel 175 ist ein Federdruckstück 182 angeordnet, das im Wesentlichen zur Kraftübertragung an das zweite Federmittel 175 oder von diesem kommend auf die Zugeinheit 108 dient.

Die Zugeinheit 108 umfasst einen unteren und einen oberen Hubraum 114, 118 und jeweils zwei den Hubräumen 114, 118 zugeordneten (Ring-)Dichtungen, wobei dem obere Hubraum 114 eine erste obere Dichtung 112.1 und eine zweite obere Dichtung 112.2 und der untere Hubraum 118 eine erste untere Dichtung 116.1 und eine zweite untere Dichtung 116.2 zugeordnet ist. Der obere und der untere Hubraum 114, 118 sind wie der Hülsenhubraum 158 in ihrer Größe und ihrem Volumen variabel. Die Dichtungen 112.1, 112.2 und 116.1, 116.2 sind als Ringdichtungen ausgebildet.

Die Zugeinheit 108 umfasst eine obere Mutter 115 und eine untere Mutter 119, wobei die Zugvorrichtung 120 über ein Außengewinde mit der oberen Mutter 115 und der unteren Mutter 119 verbunden ist. Das Federdruckstück 182 der Federeinheit 180 liegt zumindest teilweise auf einer oberen Mutterführung 113 der Zugeinheit 108 auf. Auf der oberen Mutterführung 113 und auf einer unteren Mutterführung 117 der Zugeinheit 108 liegen die obere Mutter 115 und die untere Mutter 119 auf, wobei die obere Mutter 115 auf der oberen Mutterführung 113 und die untere Mutter 119 auf der unteren Mutterführung 117 aufliegt. Die obere und die untere Mutterführung 113, 119 bilden mit einer Unterseite eine Deckenfläche des oberen und unteren Hubraums 114, 118 der Zugeinheit 108. Sobald eine Hydraulikflüssigkeit in den oberen und unteren Hubraum 114, 118 gelangt beziehungsweise in diesen hinein gepresst wird, hebt sich die Deckelfläche und somit die obere und die untere Mutterführung 113, 117.

Am Gehäuse 110.2 der Zugeinheit 108 ist entfernend von der Mittellängsachse z ein Hydraulikanschluss 170 angeordnet, der für die Zufuhr und den Rücklauf der bevorzugten Hydraulikflüssigkeit in das Befestigungssystem 100 beziehungsweise in die Hubräume 114, 118, 158 zuständig ist. In der in FIG. 1 dargestellten Geschlossenstellung der Hubräume 114, 118 und 158 erfolgt keine Längung des Gewindebolzens 30 oder eine Vor-Konditionierung als auch keine Pressung der Mutter 60 auf den Gewindebolzen 30 und auch kein Festziehen der Mutter 60. Damit ist eine Ausbildung der Schraubverbindung 10 vor Montage beziehungsweise vor Einsatz der Befestigungsvorrichtung 100 gezeigt.

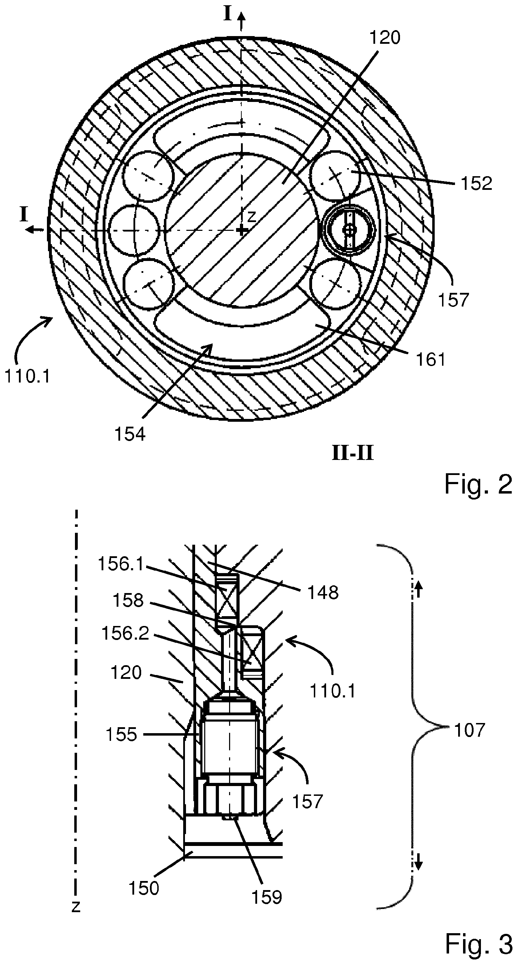

FIG. 2 zeigt das Befestigungssystem gemäß FIG. 1 in einer Schnittansicht entlang dem Schnitt II-II, der durch zwei Achsen, die rechtwinklig zu einander angeordnet sind, verläuft. Umfassend das Gehäuse 110.1, fünf erste Federmittel 152, einem Überhubventil 157, zwei Druckteile 161 und die Zugvorrichtung 120. Das Gehäuse 110.1, das um die Mittellängsachse z im Wesentlichen rotationssymmetrisch ausgebildet ist, umschließt die ersten Federmittel 152, das Überhubventil 157, die Druckteile 161 und die Zugvorrichtung 120. Die Zugvorrichtung 120 bildet sozusagen einen Kern durch die Mittellängsachse z. Zwischen der Zugvorrichtung 120 und dem Gehäuse 110.1 sind in einer ringförmigen Ausnehmung die ersten Federmittel 152, das Überhubventil 157 und die Druckteile 161 angeordnet. Über eine Achse rechtwinklig zur Mittellängsachse z sind die beiden Druckteile 161 sich gegenüberliegend in der ringförmigen Ausnehmung angeordnet. Im Bereich einer Stirnfläche der Druckteile 161 sind jeweils Druckflächen 154 angeordnet. Über eine weitere Achse, rechtwinklig zur Mittellängsachse z, sind die ersten Federmittel 152 sich gegenüberliegenden in der ringförmigen Ausnehmung angeordnet. Auf der einen Seite der weiteren Achse sind drei erste Federmittel 152 und auf einer anderen Seite der weiteren Achse sind die zwei weiteren ersten Federmittel 152 angeordnet. Auf der Seite, auf der die zwei ersten Federmittel 152 angeordnet sind, ist zwischen diesen das Überhubventil 157 in der ringförmigen Ausnehmung angeordnet.

FIG. 3 zeigt das Überhubventil 157 der Druckeinheit 107 in einer seitlichen Detailansicht. Das Überhubventil 157 ist oberhalb von der Hubaufnahme 148 und teilweise seitlich von der Führung 155 der Hubaufnahme 148 umschlossen. Unterhalb des Überhubventils 157 ist dieses mit einem Zylinderstift 159 gegenüberliegend zum Führungsstück 150 des Gehäuses 110.1 angeordnet. Angrenzend an eine Seite der Hubaufnahme 148, die näher an der Mittellängsachse z angeordnet ist, ist die Zugvorrichtung 120 angeordnet. Oberhalb des Überhubventils 157 ist der Hülsenhubraum 158 in der Geschlossenstellung angeordnet. Der Hülsenhubraum 158 weist die erste und die zweite, als Ringdichtung ausgebildete Hubraumdichtung 156.1, 156.2 auf, wobei die erste Hubraumdichtung 156.1 seitlich und oberhalb in Richtung der Mittellängsachse z des Gehäuses 110.1 am Hülsenhubraum 158 angeordnet ist. Die zweite Hubraumdichtung 156.2 ist seitlich unterhalb und entfernend von der Mittellängsachse z am Hülsenhubraum 148 angeordnet.

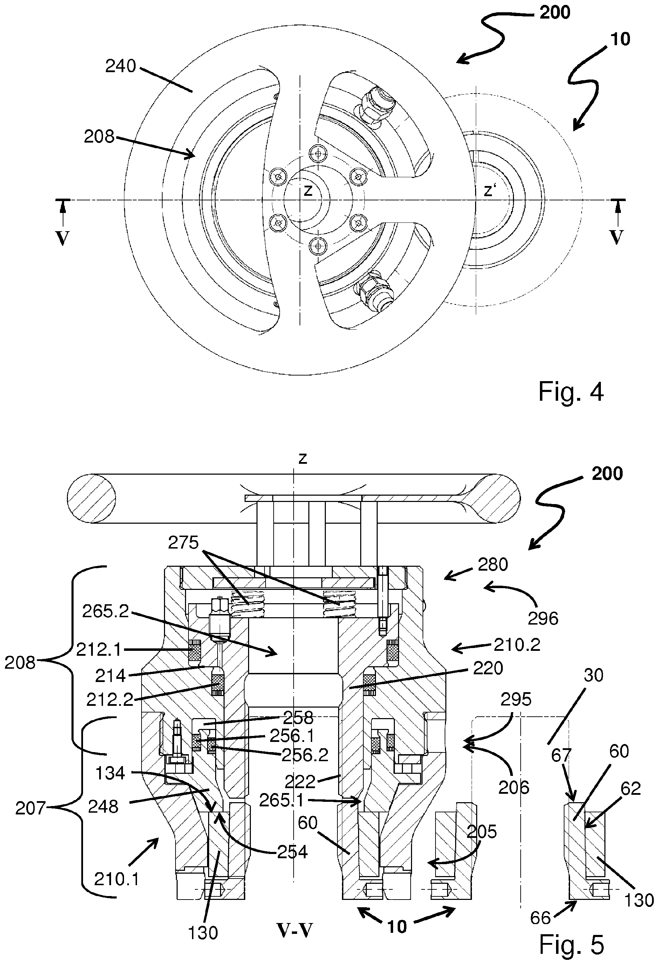

FIG. 4 zeigt eine zweite Ausführungsform eines ebenfalls hydraulisch betätigbaren Befestigungssystems 200 für eine Schraubverbindung 10 in einer Draufsicht. Verdeutlicht wird die im Wesentlichen rotationssymmetrische Ausbildung des Befestigungssystems 200 und der Schraubverbindung 10, wobei das Befestigungssystem 200 oberseitig ein Handrad 240 aufweist, dessen Fixierung auf einer Zugeinheit 208 des Befestigungssystems 200 leicht exzentrisch ist. In der ersten Ausführungsform eines Befestigungssystems 100 in FIG. 1 ist ebenfalls ein Handrad an der Federeinheit 180 anordenbar, aber nicht gezeigt.

FIG. 5 zeigt das Befestigungssystem 200 und die Schraubverbindung 10 aus FIG. 4 in einer seitlichen Schnittansicht V-V umfassend mindestens die Zugeinheit 208 und mindestens eine Druckeinheit 207. Die Druckeinheit 207 umfasst ein Gehäuse 210.1 mit einem ersten oberen Endbereich 206 und einem ersten unteren Endbereich 205 mit einer ersten Ausnehmung 265.1, die nach unten offen ausgebildet ist. Die Zugeinheit 208 umfasst ein Gehäuse 210.2 mit einem zweiten oberen Endbereich 296 und einem zweiten unteren Endbereich 295. Das Gehäuse 210.1 der Druckeinheit und das Gehäuse 210.2 der Zugeinheit bilden ein gemeinsames Gehäuse, das das Befestigungssystem 200 im Wesentlichen randseitig und oberhalb umschließt.

Die Druckeinheit 207 umfasst am ersten oberen Endbereich 206 mindestens einen Hülsenhubraum 258 und mindestens eine diesem zugeordnete Hubaufnahme 248 mit einer Druckfläche 254. Der Hülsenhubraum 258 der FIG. 5 ist in einer Offenstellung gezeigt, in der er eine Hydraulikflüssigkeit enthält. Der Hülsenhubraum 258 weist eine erste und eine zweite Hubraumdichtung 256.1, 256.2 auf, wobei die erste Hubraumdichtung 256.1 seitlich und unterhalb in Richtung einer Mittellängsachse z des Gehäuses 210 am Hülsenhubraum 258 angeordnet ist. Die zweite Hubraumdichtung 256.2 ist seitlich unterhalb und entfernend von der Mittellängsachse z am Hülsenhubraum 248 angeordnet. Die Hubaufnahme 248 ist unterhalb des Hülsenhubraums 258.

In der ersten Ausnehmung 265.1 des unteren Endbereiches 205 ist die Schraubverbindung 10 eingesetzt. Die Schraubverbindung 10 umfasst eine Mutter 60, eine Konushülse 130 und einen Gewindebolzen 30. Die Mutter 60 weist an einer Bodenfläche 66 einen Flansch 68 auf. Die Mutter 60 ist über ein Innengewinde auf einer Innenseite in Richtung der Mittellängsachse z mit dem Gewindebolzen 30 verbunden. Auf der Außenseite 62 der Mutter 60 ist die Konushülse 130 angeordnet. Die Konushülse 130 weist eine Kopffläche 134 auf, die gegenüberliegend der Druckfläche 254 der Hubaufnahme 248 angeordnet ist. Auf die Kopffläche 134 der Konushülse 130 übt die Druckeinheit 207 in der gezeigten Offenstellung des Hubraums 258 in Richtung der Mittellängsachse z eine Kraft F₂ aus.

Die Zugeinheit 208 umfasst das Gehäuse 210.2 mit dem zweiten oberen Endbereich 296 und dem zweiten unteren Endbereich 295 und eine im Gehäuse 210.2 angeordnete Zugvorrichtung 220. Die Zugvorrichtung 220 umfasst ein Innengewinde 222 und eine zweite Ausnehmung 265.2, die in Richtung der Mittellängsachse z des Gehäuses 210.2 im Wesentlichen zylindrisch und nach unteren offen ausgebildet ist. Die Zugvorrichtung 220 der Zugeinheit 208, die im Gehäuse 210.2 angeordnet ist, erstreckt sich im Wesentlichen rotationssymmetrisch um die Mittellängsachse z. Die Zugvorrichtung 220 ist derartig ausgebildet, dass sie in Richtung der Mittellängsachse z verfahrbar ist. In dieser Ausführungsform ist die Zugvorrichtung 220 der Zugeinheit 208 als Kolben mit Innengewinde ausgebildet, der im Gehäuse 210.2 derart angeordnet ist, dass er den im Gehäuse 210 anordenbaren Gewindebolzen 30 der Schraubverbindung 10 randseitig wie ein Zuganker gemäß FIG. 1 greift. Der Kolben weist im Wesentlichen die Form eines Hohlzylinders mit einem Innengewinde 222 auf. Die erste Ausnehmung 265.1 und die zweite Ausnehmung 265.2 sind miteinander verbunden und bilden einen gemeinsamen Innenraum. Der gemeinsame Innenraum ist dergestalt, dass Raum für eine anordenbare Schraubverbindung 10 ist.

Des Weiteren umfasst die Zugeinheit 208 am zweiten oberen Endbereich 295 eine Federeinheit 280, die mindestens zwei zweite Federmittel 275 aufweist. Die Zugeinheit 208 umfasst einen Hubraum 214 und eine erste und eine zweite Dichtung 212.1, 212.2, die in Geschlossenstellung gezeigt sind. In der in FIG. 5 gezeigten Arbeitsstellung des Befestigungssystems 200 erfolgt die Pressung der Mutter 60 auf den Gewindebolzen 30 über die Konushülse 130 nach vorher erfolgter Längung und gegebenenfalls Vor-Konditionierung des Gewindebolzens 30 als auch Festziehen der Mutter 60 in gelängtem Zustand.

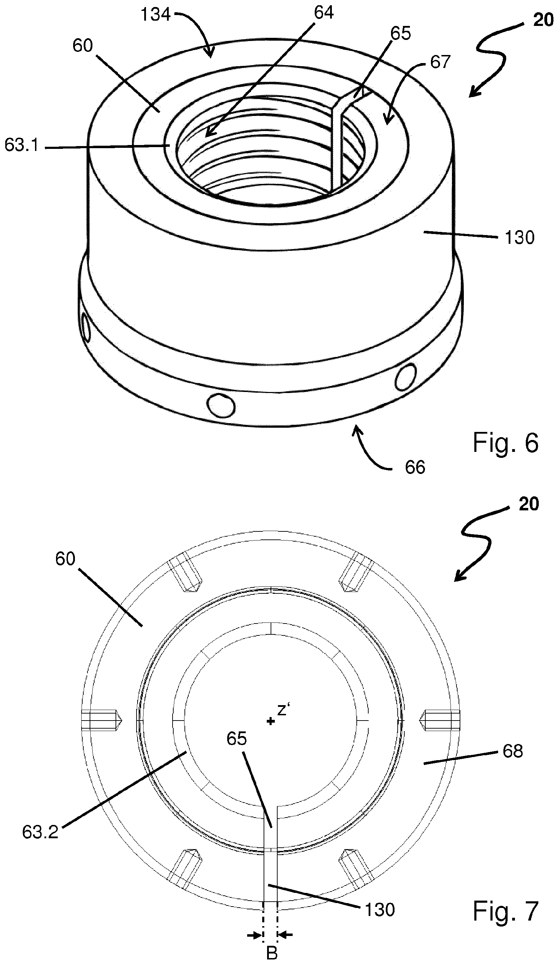

FIG. 6 zeigt eine erste Ausführungsform einer Mutter-Konushülsen-Kombination 20 in einer perspektivischen Ansicht umfassend eine Mutter 60 und eine Konushülse 130, wie diese in FIG. 1 in der Vorrichtung 100 im eingesetzten Zustand gezeigt ist. Die Mutter 60 weist an einem Bodenteil 66 einen Flansch 68 und eine Seitenwand 64 auf. Die Seitenwand 64 weist eine Längsausnehmung 65 auf, die die Seitenwand 64 in Richtung einer Mittelängsachse z' (siehe FIG. 7) der Mutter 60 und rechtwinklig zur Mittellängsachse z' vollständig durchdringt. Die Konushülse 130 liegt die Seitenwand 64 der Mutter 60 umschließend an dieser nahezu vollständig an. Eine Kopffläche 134 der Konushülse 130 und eine Kopffläche 67 der Mutter 60 bilden eine im Wesentlichen gemeinsame und ebene Fläche. Die Seitenwand 64 weist ein Innengewinde an ihrer Innenseite auf. Das Innengewinde ist nicht bis zur Bodenfläche der Seitenwand 64 beziehungsweise des Flansches 68 ausgebildet, sondern endet beabstandet von dieser. An der Innenseite der Seitenwand 64 ist eine obere Fase 63.1 als auch eine untere Fase ausgebildet. Die untere Fase 63.2 bildet einen Übergang von dem innengewindefreien Bereich zu dem Innengewinde, und weist zumindest teilweise auch das Innengwinde auf, allerding mit in Richtung auf die Bodenfläche zu abnehmender Tiefe des Gewindeganges des Innengewindes.

FIG. 7 zeigt die Mutter-Konushülsen-Kombination 20 aus FIG. 6 in einer Unteransicht auf die Mutter 60 und die Konushülse 130 und den Flansch 68 der Mutter 60. Verdeutlicht wird die Längsausnehmung 65, die eine Breite B aufweist, und die auch den Flansch 68 der Mutter 60 durchdringt.

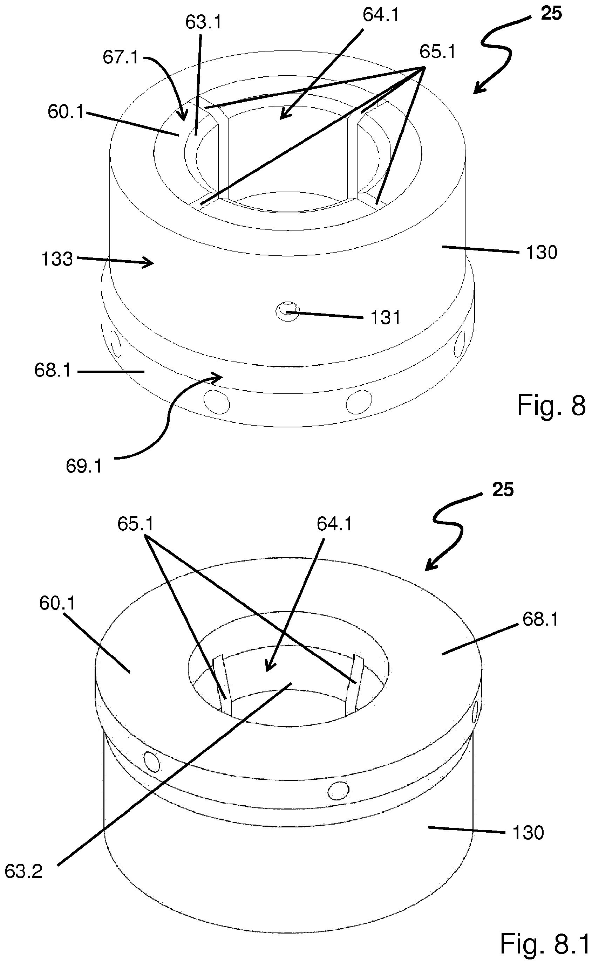

FIG. 8 zeigt eine zweite Ausführungsform einer Mutter-Konushülsen-Kombination 25 in einer perspektivischen Ansicht umfassend eine Mutter 60.1 und die Konushülse 130. Die Mutter 60.1 weist vier Längsausnehmung 65.1 auf, die die Seitenwand 64.1 in Richtung der Mittelängsachse z' (siehe FIG. 7) der Mutter 60.1 und rechtwinklig zur Mittellängsachse z' bis etwa zu einer äußeren Oberfläche 69.1 eines Flansches 68.1 durchdringt. Die Seitenwand 64.1 weist angrenzend an eine Kopffläche 67.1 der Seitenwand 64.1 und entfernend von der Konushülse 130 auf der Innenseite der Seitenwand 64.1 eine rund umlaufende obere Fase 63.1 und eine innere, untere Fase 63.2 (siehe FIG. 8.1) auf. In die untere Fase 63.2 und leicht über diese hinaus verlaufen die vier Längsausnehmungen 65.1, die schlitzförmig, zur Kopffläche 67 hin offen, ausgebildet sind. Ausgehend von einer Konushülsenaußenseite 133 der Konushülse 130 erstreckt sich, durch die Konushülse 130 hindurch und auf die Mittellängsachse z' zu, ein Druckanschluss 131. Durch den Druckanschluss 131 gelangt ein Fluid an die Mutter 60.1 und ermöglicht durch eine Druckerhöhung des Fluides ein Trennen der Konushülse 130 von der Mutter 60.1. Des Weiteren umfasst die Seitenwand 64.1 der Mutter 60.1 ein Innengewinde, welches FIG. 8 nicht zu entnehmen ist (siehe aber hierzu FIG. 6).

FIG. 8.1 zeigt die zweite Ausführungsform der Mutter-Konushülsen-Kombination 25 in einer perspektivischen Unterseitenansicht umfassend die Mutter 60.1 und die Konushülse 130. Verdeutlicht sind zwei der vier Längsausnehmungen 65.1 der Mutter 60.1, die die Mutter 60.1 im Bereich des Flansches 68.1 in Richtung der Mittellängssachse z' (siehe FIG. 7) nicht vollständig durchdringt. Der Flansch 68.1 und der Bereich der Seitenwand 64.1, der seitlich vom Flansch umschlossen ist, halten die Mutter 60.1 zu einem Element zusammen, wohingegen der übrige Bereich der Seitenwand 64.1 durch eine seitliche Kraftaufbringung komprimierbar ist. Durch die seitliche Kraftaufbringung verringern sich die Längsausnehmungen 65.1 in einer Breite B (siehe FIG. 7). Gut ist die untere Fase 63.2 und deren Ausbildung zu erkennen.

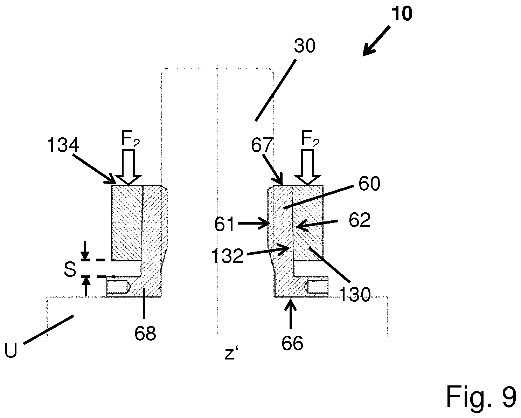

FIG. 9 zeigt eine Ausführungsform einer Schraubverbindung 10 mit einer Unterlage U, wobei die Schraubverbindung 10 eine Mutter 60, eine Konushülse 130 und einen Gewindebolzen 30 umfasst. Die Mutter 60 weist eine Innenseite 61 und eine Außenseite 62 auf, wobei die Innenseite 61 näher zu einer Mittellängsachse z' der Mutter 60 als die Außenseite 62 angeordnet ist. Weiter weist die Mutter 60 an einer Bodenfläche 66 den Flansch 68 und eine der Bodenfläche 66 gegenüberliegende Kopffläche 67 auf. Mit dem Flansch 68 und der Bodenfläche 66 liegt die Mutter 60 auf der Untererlage U auf. Auf der Außenseite 62 der Mutter 60 liegt die Konushülse 130 mit einer Konushülseninnenseite 132 vollständig an. Zwischen dem Flansch 68 der Mutter 60 und einem unteren Ende der Konushülse 130 weist die Schraubverbindung 10 einen Spalt S auf. Der Spalt S verringert sich bis maximal zur Schließung, sobald eine Kraft F₂ auf eine Kopffläche 134 der Konushülse 130 einwirkt.

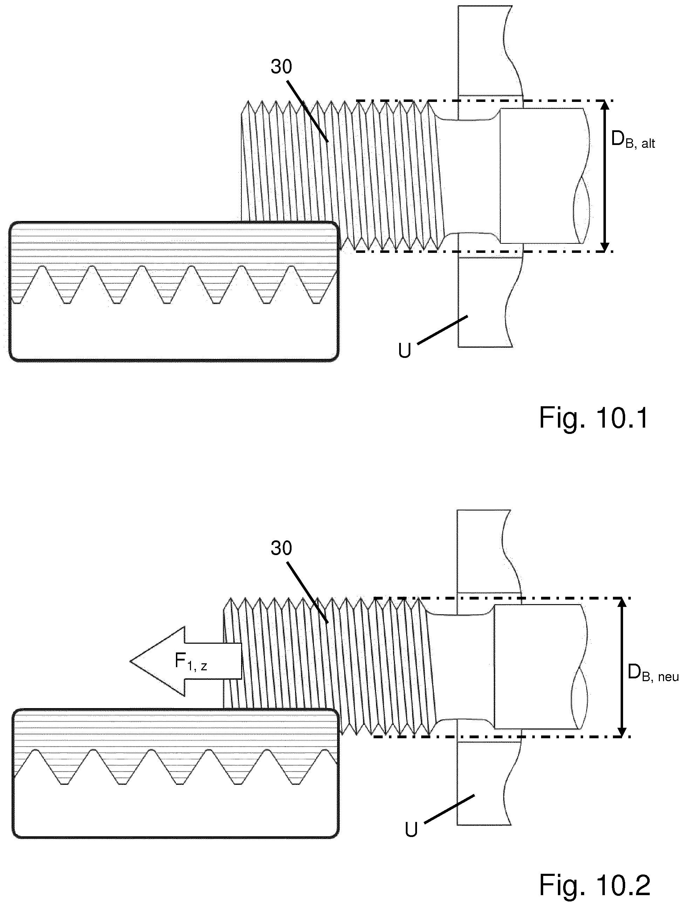

FIG. 10.1 zeigt den Gewindebolzen 30 der Schraubverbindung 10 aus FIG. 9 mit einer Unterlage in einem ersten Verfahrensschritt, wobei der Gewindebolzen 30 in einem ungelängten Zustand einen ersten Bolzen-Gewindedurchmesser D_{B,alt} mit einer ursprünglichen Bolzen-Gewindegeometrie aufweist.

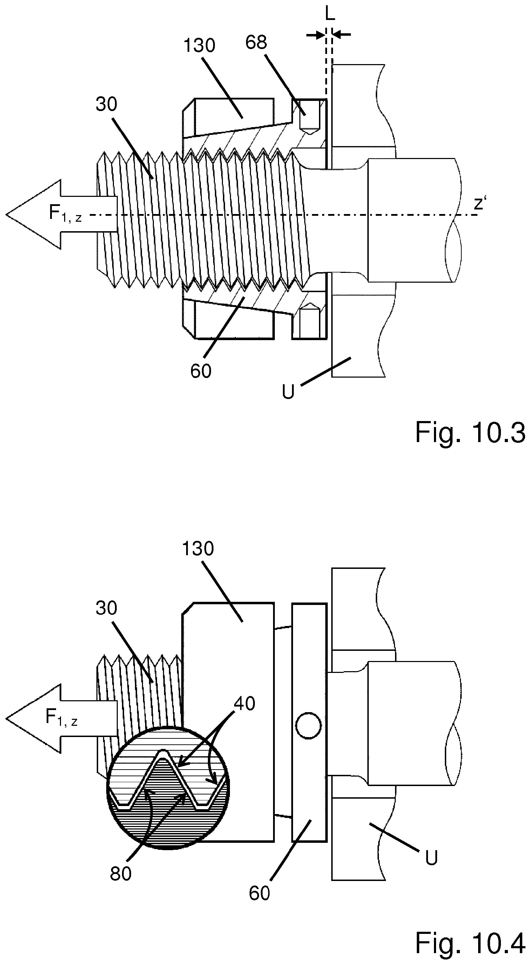

FIG. 10.2 zeigt den Gewindebolzen 30 der Schraubverbindung 10 aus FIG. 9 mit der Unterlage U in einem zweiten Verfahrensschritt, wobei der Gewindebolzen 30 in einem gelängten Zustand einen zweiten Bolzen-Gewindedurchmesser D_{B,neu} mit einer veränderten Bolzen-Gewindegeometrie aufweist. Der Gewindebolzen 30 wird im zweiten Verfahrensschritt gegebenenfalls zunächst mehrfach über die Mittellängsachse z der Mutter 60 (siehe FIG. 10.3) mit einer Kraft F_{1,z} gelängt, um eine wie oben in der allgemeinen Beschreibung angesprochene Vor-Konditionierung zu erhalten. Ansonsten wird der Gewindebolzen 30 durch die Zugeinheit 107, 207 einer Befestigungsvorrichtung 100, 200 gezogen, bis dieser den in FIG. 10.2 gezeigten gelängten Zustand erreicht. Im gelängten Zustand ist der zweiten Bolzen-Gewindedurchmesser D_{B,neu} kleiner als der erste Bolzen-Gewindedurchmesser D_{B,alt} im ungelängten Zustand. Die veränderte Bolzen-Gewindegeometrie unterscheidet sich im Wesentlichen von der ursprünglichen Bolzen-Gewindegeometrie (siehe FIG. 10.1) dadurch, dass die Gewindesteigung steiler geworden ist, was an den vergrößerten Ansichten des Gewindegangs des Gewindebolzens in den FIG. 10.1 und 10.2 gut ersichtlich ist.

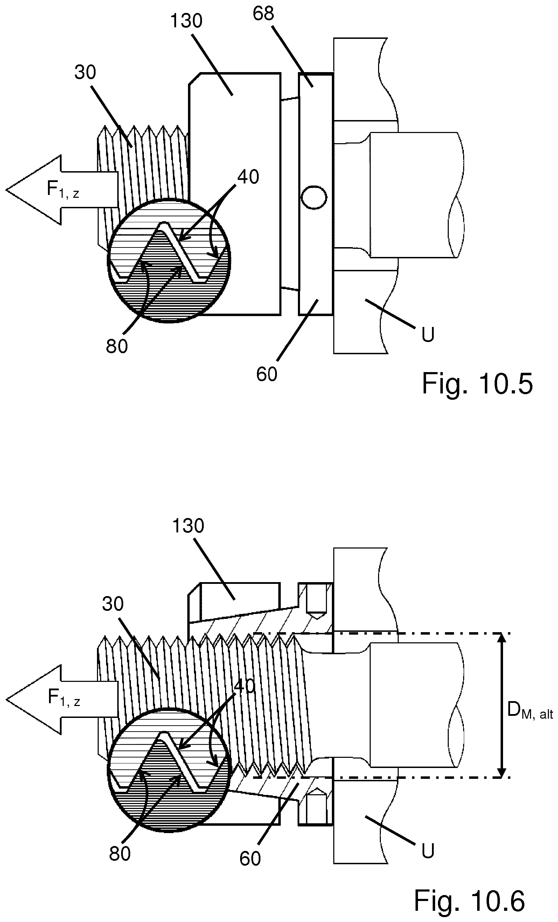

FIG. 10.3 zeigt die Schraubverbindung 10 in einer Schnittansicht mit der Unterlage U aus FIG. 9 in einem dritten Verfahrensschritt, wobei die Schraubverbindung 10 die Mutter 60, die Konushülse 130 und den gelängten Gewindebolzen 30 umfasst. Die Mutter 60 weist in dem gezeigten, noch ungepressten Zustand einen ersten Mutter-Gewindedurchmesser D_{M,alt} (siehe FIG. 10.6) mit einem im Wesentlichen der veränderten Bolzen-Gewindegeometrie angepassten Gewinde auf. Die Mutter 60 wurde vor der im zweiten Verfahrensschritt erfolgten Längung und gegebenenfalls Vor-Konditionierung auf den Gewindebolzen 30 aufgesetzt. Die Mutter 60 und die Konushülse 130 weisen im dritten Verfahrensschritt eine Lücke L zwischen der Unterlage U und dem Flansch 68 auf.

FIG. 10.4 zeigt die Schraubverbindung 10 mit der Unterlage U aus FIG. 9 im dritten Verfahrensschritt, wobei die die Schraubverbindung 10 die Mutter 60, die Konushülse 130 und den Gewindebolzen 30 umfasst. Eine vergrößerte Detailansicht veranschaulicht, dass zwischen Muttergewindeflanken 80 der Mutter 60 und Bolzengewindeflanken 40 des Bolzens 30 ein gewisses Flankenspiel vorhanden ist.

FIG. 10.5 zeigt die Schraubverbindung 10 mit der Unterlage U aus FIG. 9 in einem vierten Verfahrensschritt, wobei die Schraubverbindung 10 die Mutter 60, die Konushülse 130 und den Gewindebolzen 30 umfasst. Im vierten Verfahrensschritt wird die Mutter 60 und die Konushülse 130 festgedreht, bis die Lücke L (siehe FIG. 10.3) vollständig geschlossen ist und der Flansch 68 der Mutter 60 auf der Unterlage U aufliegt. Eine vergrößerte Detailansicht veranschaulicht, dass eine Muttergewindeflanke 80 der Mutter 60 an einer Bolzengewindeflanke 40 des Bolzens 30 anliegt, wodurch eine gewisse Haftreibung durch die anliegenden Flächen gegeben ist.

FIG. 10.6 zeigt die Schraubverbindung 10 in einer Schnittansicht mit der Unterlage U aus FIG. 9 im vierten Verfahrensschritt, wobei die die Schraubverbindung 10 die Mutter 60, die Konushülse 130 und den Gewindebolzen 30 umfasst. Im vierten Verfahrensschritt weist die Mutter 60 noch immer den ungepressten Zustand und den ersten Mutter-Gewindedurchmesser D_{M,alt} auf.

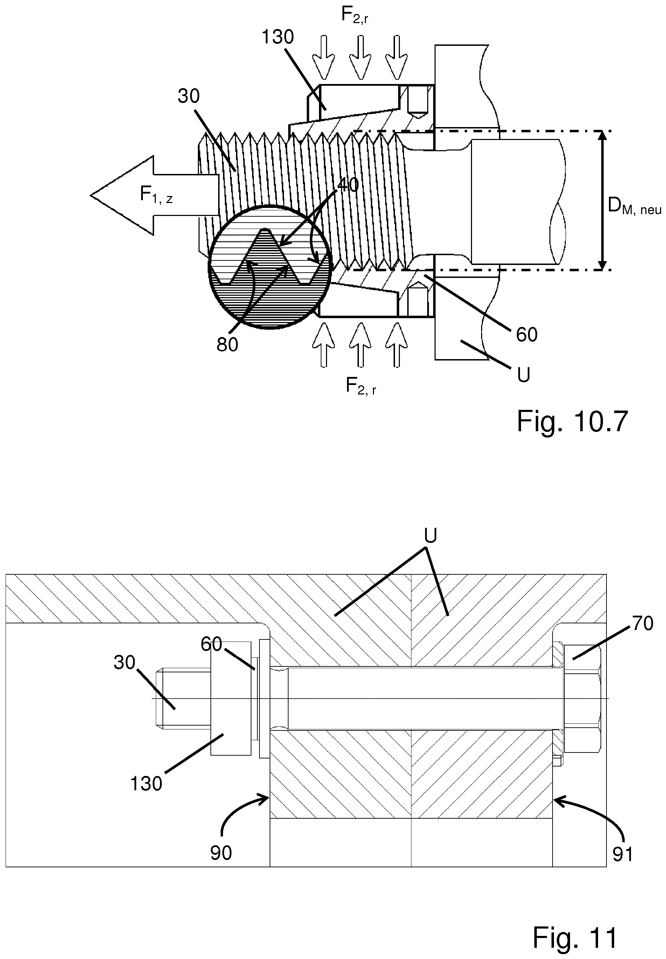

FIG. 10.7 zeigt die Schraubverbindung 10 in einer Schnittansicht mit der Unterlage U aus FIG. 9 in einem fünften Verfahrensschritt, wobei die Schraubverbindung 10 die Mutter 60, die Konushülse 130 und den Gewindebolzen 30 umfasst. Bedingt durch das Aufbringen der Kraft F₂ (siehe FIG. 9) hat sich der Spalt S (siehe FIG. 9) verkleinert. Auf Grund der Konizität der Mutter 60 und der Konushülse 130 wirkt eine radiale Kraft F_{2,r} auf die Mutter 60, die nun einen gepressten Zustand mit einem zweiten Mutter-Gewindedurchmesser D_{M,neu} aufweist. Der zweite Mutter-Gewindedurchmesser D_{M,neu} ist kleiner als der ersten Mutter-Gewindedurchmesser D_{M,alt} (siehe FIG. 10.6). Eine Detailansicht veranschaulicht, dass die Muttergewindeflanke 80 der Mutter 60 nahezu vollständig an den Bolzengewindeflanke 40 des Bolzens 30 anliegen. Es erfolgt ein Formschluss zwischen den Muttergewindeflanken 80 und den Bolzengewindeflanken 80. Auf Grund des Schließens des Flankenspiels und dem nahezu vollständigen Anliegen der Flanken maximiert sich die Reibfläche auf etwa 100 %, wodurch nahezu die maximale Haftreibung µ0 gegeben ist.

FIG. 11 zeigt die Schraubverbindung aus FIG. 9 mit einer Unterlage U in einem montierten Zustand. Die Unterlage U, die zweiteilig ausgebildet ist, wird von dem Gewindebolzen 30 vollständig durchdrungen. Auf einer ersten Oberfläche 90 der Unterlage U ist die verpresste Mutter 60 mit der Konushülse 130, den Gewindebolzen 30 umschließend, angeordnet. Auf einer zweiten Oberfläche 91der Unterlage U, die eine gegenüberliegende Fläche zur ersten Oberfläche 90 ist, ist ein Bolzenkopf 70 des Gewindebolzens 30 angeordnet. Der Gewindebolzen 30 ist somit von beiden Seiten der Unterlage U von der Mutter 60 und dem Bolzenkopf 70 gegriffen und fixiert die zweiteilige Unterlage U.

Die in den Figuren dargestellten Ausführungsformen sind nicht beschränkend auszulegen. So kann die Befestigungsvorrichtung einen Hydraulikanschluss oder mehrere Hydraulikanschlüsse aufweisen, der/die mit den jeweiligen Hubräumen verbunden ist/sind. Weiter können die Zugeinheit und die Druckeinheit mindestens zwei getrennte Bauteile sein, die je nach Verfahrensschritt auf der Schraubverbindung angebracht werden. Des Weiteren kann die Zahl der Hubräume und der daran geordneten Dichtungen je nach Dimensionierung der Hubräume variieren.

Mit der vorliegenden Erfindung wird eine hochfeste, dauerhafte Schraubverbindung ermöglicht, die Arbeitskosten und insbesondere Wartungskosten verringert, ein schnelles Erstellen einer gespannten und verpressten Schraubverbindung ermöglicht und über die Lebensdauer der verbundenen Unterlagen beziehungsweise Bauteile nicht mehr nachgespannt werden muss.

## Patentansprüche

1. Befestigungssystem (100, 200) für mindestens eine Schraubverbindung (10), umfassend
- mindestens eine Zugeinheit (108, 208),
**gekennzeichnet durch**
- mindestens eine Druckeinheit (107, 207),
wobei
- die Druckeinheit (107, 207) ein Gehäuse (110.1, 210.1) mit einem ersten oberen Endbereich (106, 206) und einem ersten unteren Endbereich (105, 205) mit einer ersten Ausnehmung (165.1, 265.1) umfasst, die nach unten offen ausgebildet ist,
- die Druckeinheit (107, 207) am ersten oberen Endbereich (106, 206) mindestens einen Hülsenhubraum (158, 258) und mindestens eine diesem zugeordnete Hubaufnahme (148, 248) mit einer Druckfläche (154, 254) umfasst,
- am ersten unteren Endbereich (105, 205) der Druckeinheit (107, 207) eine Konushülse (130) in die erste Ausnehmung (165.1, 265.1) einsetzbar ist, und
- die Hubaufnahme (148, 248) der Druckeinheit (107, 207) im Gehäuse (110.1, 210.1) derart angeordnet ist, dass die Hubaufnahme (148, 248) mittels hydraulischer und/oder mechanischer Betätigung in Richtung einer Mittellängsachse z des Gehäuses (110.1, 210.1) verfahrbar ist und über ein dieser zugeordnetes Druckteil (161) oder unmittelbar eine Kraft F₂ auf die einsetzbare Konushülse (130) ausübt.

2. Befestigungssystem (100, 200) gemäß Anspruch 1, **dadurch gekennzeichnet, dass** die Druckeinheit (107, 207) im Wesentlichen unterhalb der Zugeinheit (108, 208) angeordnet ist.

3. Befestigungssystem (100, 200) gemäß Anspruch 1, **dadurch gekennzeichnet, dass** die Zugeinheit (108, 208) und die Druckeinheit (107, 207) mindestens zwei getrennte Bauteile sind.

4. Befestigungssystem (100, 200) gemäß einem oder mehreren der vorherigen Ansprüche, **dadurch gekennzeichnet, dass** die Druckeinheit (107, 207) zwischen der Hubaufnahme (148, 248) und der einsetzbaren Konushülse (130) mindestens ein erstes Federmittel (152) umfasst.

5. Befestigungssystem (100, 200) gemäß Anspruch 4, **dadurch gekennzeichnet, dass** das erste Federmittel (152) mittels hydraulischer und/oder mechanischer Betätigung in Richtung einer Mittellängsachse z des Gehäuses (110.1, 210.1) spannbar und/oder entspannbar ausgebildet ist.

6. Befestigungssystem (100) gemäß einem oder mehreren der vorherigen Ansprüche, **dadurch gekennzeichnet, dass** das Gehäuse (110.1) der Druckeinheit (107) am ersten unteren Endbereich (105) mindestens ein Führungsstück (150) aufweist.

7. Befestigungssystem (100, 200) gemäß einem oder mehreren der vorherigen Ansprüche, **dadurch gekennzeichnet, dass** die Zugeinheit (108, 208) mindestens ein Gehäuse (110.2, 210.2) mit einem zweiten oberen Endbereich (196, 296) und einem zweiten unteren Endbereich (195, 295) und mindestens eine im Gehäuse (110.2, 210.2) angeordnete Zugvorrichtung (120, 220) umfasst, wobei die Zugvorrichtung (120, 220) mindestens ein Innengewinde (122, 222) und eine zweite Ausnehmung (165.2, 265.2) umfasst, die in Richtung der Mittellängsachse z des Gehäuses (110.2, 210.2) im Wesentlichen zylindrisch und nach unten offen ausgebildet ist.

8. Schraubverbindung (10), hergestellt mit einem Befestigungssystem (100, 200) gemäß einem oder mehreren der vorherigen Ansprüche, umfassend
- mindestens eine Mutter (60) umfassend
- eine Innenseite (61) mit einem Innengewinde,
- eine Außenseite (62),
- eine Bodenfläche (66) und
- eine der Bodenfläche (66) gegenüberliegende Kopffläche (67),
- mindestens eine Konushülse (130) und
- mindestens einen Gewindebolzen (30),
wobei
- der Gewindebolzen (30) in einem ungelängten Zustand einen ersten Bolzen-Gewindedurchmesser D_{B,alt} und in einem gelängten Zustand einen zweiten Bolzen-Gewindedurchmesser D_{B,neu} mit einer veränderten Bolzen-Gewindegeometrie aufweist;
- die Mutter (60) in einem ungepressten Zustand einen ersten Mutter-Gewindedurchmesser D_{M,alt} mit einem im Wesentlichen der veränderten Bolzen-Gewindegeometrie angepassten Gewinde aufweist und in einem gepressten Zustand einen zweiten Mutter-Gewindedurchmesser D_{M,neu} aufweist;
- die Außenseite (62) konusförmig ausgebildet ist;
- die Einschnürung der Konizität von der Bodenfläche (66) bis zu der Kopffläche (67) verläuft oder ausgehend von einem Flansch (68), den die Mutter (60) an der Bodenfläche (66) aufweist, bis zu der Kopffläche (67) verläuft.

9. Schraubverbindung (10) gemäß Anspruch 8, **dadurch gekennzeichnet, dass** die Konushülse (130) eine Kopffläche (134) aufweist, über die sie mit der Druckfläche (154, 254) der Hubaufnahme (148, 248) zusammenwirkbar ausgestaltet ist.

10. Schraubverbindung (10) gemäß einem oder mehreren der Ansprüche 8 und 9, **dadurch gekennzeichnet, dass**
- eine Seitenwand (64) der Mutter (60) mindestens eine Längsausnehmung (65) aufweist, die die Seitenwand (64) der Mutter (60) in Richtung einer Mittellängsachse z' der Mutter (60) mindestens über eine Teillänge und in Richtung einer x-Achse, rechtwinklig zur Mittellängsachse z', vollständig durchdringt.

11. Mutter (60) zum Einsatz in einer Schraubverbindung (10) gemäß einem oder mehreren der Ansprüche 8 bis 10, umfassend
- eine Innenseite (61) mit einem Innengewinde,
- eine Außenseite (62),
- eine Bodenfläche (66) und
- eine der Bodenfläche (66) gegenüberliegende Kopffläche (67);
wobei
- die Außenseite (62) konusförmig ausgebildet ist;
- die Einschnürung der Konizität von der Bodenfläche (66) bis zu der Kopffläche (67) verläuft oder ausgehend von einem Flansch (68), den die Mutter (60) an der Bodenfläche (66) aufweist, bis zu der Kopffläche (67) verläuft;
- eine Seitenwand (64) der Mutter (60) mindestens eine Längsausnehmung (65) aufweist, die die Seitenwand (64) der Mutter (60) in Richtung einer Mittellängsachse z' der Mutter (60) mindestens über eine Teillänge und in Richtung einer x-Achse, rechtwinklig zur Mittellängsachse z', vollständig durchdringt.

12. Mutter-Konushülsen-Kombination (20, 25) zum Einsatz in einer Schraubverbindung (10), umfassend
- eine Mutter (60) gemäß Anspruch 11 und
- eine Konushülse (130),
wobei
- die Konushülse (130) auf mindestens einer Konushülseninnenseite (132) in etwa entsprechend einer Seitenwand (64) der Mutter (60) ausgebildet ist.

13. Verfahren zur Erstellung mindestens einer Schraubverbindung (10) mit einem Befestigungssystem (100, 200) gemäß einem oder mehreren der Ansprüche 1 bis 7, wobei die Druckeinheit (107, 207) des Befestigungssystems (100, 200) und eine Konushülse (130) eine Verpressung einer Mutter (60) mit einem Gewindebolzen (30) bewirken.

14. Verfahren gemäß Anspruch 13, **dadurch gekennzeichnet, dass** durch eine Hubaufnahme (248) der Druckeinheit (107, 207) oder ein Druckteil (161) der Hubaufnahme (148) die Konushülse (130) über eine Konushülseninnenseite (132), die auf einer Außenseite (62) der Mutter (60) im Wesentlichen anliegt, in Richtung einer Mittellängsachse z, z' auf die Mutter (60) der Schraubverbindung (10) aufgeschoben wird.

15. Verfahren gemäß einem oder mehreren der Ansprüche 13 und 14, **dadurch gekennzeichnet, dass** mindestens eine Längsausnehmung (65) der Mutter (60) eine Breite B aufweist, die durch die Bewegung der Konushülse (130) auf die Mutter (60) verringert wird.

16. Verfahren gemäß einem oder mehreren der Ansprüche 13 bis 15, **dadurch gekennzeichnet, dass** Muttergewindeflanken (80) der Mutter (60), die gegenüberliegend zu Bolzengewindeflanken (40) des Gewindebolzens (30) angeordnet sind, auf die Bolzengewindeflanken (40) aufgeschoben werden, bis eine im Wesentlichen vollständige Anlage erzielt wird.

17. Verwendung eines Befestigungssystems (100, 200), das gemäß einem oder mehreren der Ansprüche 1 bis 7 ausgebildet ist, zur Erstellung mindestens einer Schraubverbindung (10), wobei die Druckeinheit (107, 207) des Befestigungssystems (100, 200) und eine Konushülse (130) eine Verpressung einer Mutter (60) mit einem Gewindebolzen (30) bewirken.

## Claims

1. Fixing system (100, 200) for at least one screw connection (10), comprising
- at least one pulling unit (108, 208),
**characterized by**
- at least one pressure unit (107, 207),
wherein
- the pressure unit (107, 207) comprises a housing (110.1, 210.1) with a first upper end region (106, 206) and a first lower end region (105, 205) with a first recess (165.1, 265.1) that is formed open downward,
- the pressure unit (107, 207) comprises at least one sleeve stroke space (158, 258) at the first upper end region (106, 206) and at least one stroke receptacle (148, 248) associated therewith and having a pressure surface (154, 254),
- at the first lower end region (105, 205) of the pressure unit (107, 207) a cone sleeve (130) is insertable into the first recess (165.1, 265.1), and
- the stroke receptacle (148, 248) of the pressure unit (107, 207) is arranged in the housing (110.1, 210.1) in such a way that the stroke receptacle (148, 248) can be moved by means of hydraulic and/or mechanical actuation in the direction of a central longitudinal axis z of the housing (110.1, 210.1) and exerts a force F₂ on the insertable cone sleeve (130) via a pressure part (161) associated therewith or directly.

2. Fixing system (100, 200) according to claim 1, **characterized in that** the pressure unit (107, 207) is arranged substantially below the pulling unit (108, 208).

3. Fixing system (100, 200) according to claim 1, **characterized in that** the pulling unit (108, 208) and the pressure unit (107, 207) are at least two separate components.

4. Fixing system (100, 200) according to one or more of the preceding claims, **characterized in that** the pressure unit (107, 207) comprises at least a first spring means (152) between the stroke receptacle (148, 248) and the insertable cone sleeve (130).

5. Fixing system (100, 200) according to claim 4, **characterized in that** the first spring means (152) is designed to be tensionable and/or untensionable by means of hydraulic and/or mechanical actuation in the direction of a central longitudinal axis z of the housing (110.1, 210.1).

6. Fixing system (100) according to one or more of the previous claims, **characterized in that** the housing (110.1) of the pressure unit (107) comprises at least one guide piece (150) at the first lower end region (105).

7. Fixing system (100, 200) according to one or more of the preceding claims, **characterized in that** the pulling unit (108, 208) comprises at least one housing (110.2, 210.2) having a second upper end region (196, 296) and a second lower end region (195, 295) and at least one pulling device (120, 220) arranged in the housing (110.2, 210.2), wherein the pulling device (120, 220) comprises at least one internal thread (122, 222) and a second recess (165.2, 265.2) which is substantially cylindrical in the direction of the central longitudinal axis z of the housing (110.2, 210.2) and is open at the bottom.

8. Screw connection (10) made with a fixing system (100, 200) according to one or more of the preceding claims, comprising
- at least one nut (60) comprising
- an inner side (61) with an internal thread,
- an outer side (62),
- a bottom surface (66), and
- a head surface (67) opposite the bottom surface (66),
- at least one cone sleeve (130) and
- at least one threaded bolt (30),
wherein
- the threaded bolt (30) has a first bolt thread diameter D_{B,old} in an unelongated state and a second bolt thread diameter D_{B,new} with a modified bolt thread geometry in an elongated state;
- the nut (60) in an unpressed state has a first nut thread diameter D_{M,old} with a thread substantially adapted to the modified bolt thread geometry and in a pressed state has a second nut thread diameter D_{M,new};
- the outer side (62) is conical;
- the constriction of the conicity extends from the bottom surface (66) to the head surface (67) or extends from a flange (68), which the nut (60) has on the bottom surface (66), to the head surface (67).

9. Screw connection (10) according to claim 8, **characterized in that** the cone sleeve (130) has a head surface (134) via which it is designed to cooperate with the pressure surface (154, 254) of the stroke receptacle (148, 248).

10. Screw connection (10) according to one or more of claims 8 and 9, **characterized in that**
- a side wall (64) of the nut (60) has at least one longitudinal recess (65) which penetrates the side wall (64) of the nut (60) in the direction of a central longitudinal axis z' of the nut (60) at least over a partial length and in the direction of an x-axis, at right angles to the central longitudinal axis z', completely.

11. Nut (60) for use in a screw connection (10) according to one or more of claims 8 to 10, comprising
- an inner side (61) with an internal thread,
- an outer side (62),
- a bottom surface (66), and
- a head surface (67) opposite the bottom surface (66);
wherein
- the outer side (62) is conical;
- the constriction of the conicity extends from the bottom surface (66) to the head surface (67) or extends from a flange (68), which the nut (60) has on the bottom surface (66), to the head surface (67);
- a side wall (64) of the nut (60) has at least one longitudinal recess (65) which penetrates the side wall (64) of the nut (60) in the direction of a central longitudinal axis z' of the nut (60) at least over a partial length and in the direction of an x-axis, at right angles to the central longitudinal axis z', completely.

12. Nut and cone sleeve combination (20, 25) for use in a screw connection (10), comprising
- a nut (60) according to claim 11 and
- a cone sleeve (130),
wherein
- the cone sleeve (130) on at least one cone sleeve inner side (132) is formed approximately corresponding to a side wall (64) of the nut (60).

13. Method for producing at least one screw connection (10) with a fixing system (100, 200) according to one or more of claims 1to 7, wherein the pressure unit (107, 207) of the fixing system (100, 200) and a cone sleeve (130) effect a compression of a nut (60) with a threaded bolt (30).

14. Method according to claim 13, **characterized in that**, by means of a stroke receptacle (248) of the pressure unit (107, 207) or a pressure part (161) of the stroke receptacle (148), the cone sleeve (130) is pushed onto the nut (60) of the screw connection (10) in the direction of a central longitudinal axis z, z' via a cone sleeve inner side (132), which substantially abuts on an outer side (62) of the nut (60).

15. Method according to one or more of claims 13 and 14, **characterized in that** at least one longitudinal recess (65) of the nut (60) has a width B that is reduced by the movement of the cone sleeve (130) onto the nut (60).

16. Method according to one or more of claims 13 to 15, **characterized in that** nut thread flanks (80) of the nut (60) arranged opposite to bolt thread flanks (40) of the threaded bolt (30) are pushed onto the bolt thread flanks (40) until a substantially complete abutment is achieved.

17. Use of a fixing system (100, 200) formed according to one or more of claims 1 to 7 for creating at least one screw connection (10), wherein the pressure unit (107, 207) of the fixing system (100, 200) and a cone sleeve (130) effect a compression of a nut (60) with a threaded bolt (30).

## Revendications

1. Système de fixation (100, 200) pour au moins un raccord à vis (10), comprenant
- au moins une unité de traction (108, 208),
**caractérisé par**
- au moins une unité de pression (107, 207),
dans lequel "
- l'unité de pression (107, 207) comprend un boîtier (110.1, 210.1) avec une première zone d'extrémité supérieure (106, 206) et une première zone d'extrémité inférieure (105, 205) avec une première cavité (165.1, 265.1) qui est ouverte vers le bas,
- l'unité de pression (107, 207) comprend au niveau de la première zone d'extrémité supérieure (106, 206) au moins une chambre de levage à manchon (158, 258) et au moins un réceptacle de levage (148, 248) associé à celle-ci avec une surface de pression (154, 254),
- au niveau de la première zone d'extrémité inférieure (105, 205) de l'unité de pression (107, 207), un manchon conique (130) peut être inséré dans la première cavité (165.1, 265.1), et
- le réceptacle de levage (148, 248) de l'unité de pression (107, 207) est disposé dans le boîtier (110.1, 210.1) de sorte que le réceptacle de levage (148, 248) peut être déplacé par actionnement hydraulique et/ou mécanique dans la direction d'un axe longitudinal central z du boîtier (110.1, 210.1) et exerce par le biais d'un élément de pression (161) associé à celui-ci ou indirectement une force F₂ sur le manchon conique insérable (130).

2. Système de fixation (100, 200) selon la revendication 1, **caractérisé en ce que** l'unité de pression (107, 207) est située sensiblement au-dessous de l'unité de traction (108, 208).

3. Système de fixation (100, 200) selon la revendication 1, **caractérisé en ce que** l'unité de traction (108, 208) et l'unité de pression (107, 207) sont au moins deux composants séparés.

4. Système de fixation (100, 200) selon une ou plusieurs des revendications précédentes, **caractérisé en ce que** l'unité de pression (107, 207) comprend au moins un premier moyen de ressort (152) entre le réceptacle de levage (148, 248) et le manchon conique insérable (130).

5. Système de fixation (100, 200) selon la revendication 4, **caractérisé en ce que** le premier moyen de ressort (152) peut être tendu et/ou détendu par actionnement hydraulique et/ou mécanique dans la direction d'un axe longitudinal central z du boîtier (110.1, 210.1).

6. Système de fixation (100) selon une ou plusieurs des revendications précédentes, **caractérisé en ce que** le boîtier (110.1) de l'unité de pression (107) présente au niveau de la première zone d'extrémité inférieure (105) au moins une pièce de guidage (150).

7. Système de fixation (100, 200) selon une ou plusieurs des revendications précédentes, **caractérisé en ce que** l'unité de traction (108, 208) comprend au moins un boîtier (110.2, 210.2) avec une deuxième zone d'extrémité supérieure (196, 296) et une deuxième zone d'extrémité inférieure (195, 295) et au moins un dispositif de traction (120, 220) disposé dans le boîtier (110.2, 210.2), le dispositif de traction (120, 220) comprenant au moins un filetage intérieur (122, 222) et une deuxième cavité (165.2, 265.2) qui est configurée de façon sensiblement cylindrique dans la direction de l'axe longitudinal central z du boîtier (110.2, 210.2) et ouverte vers le bas.

8. Raccord à vis (10), fabriqué avec un système de fixation (100, 200) selon une ou plusieurs des revendications précédentes, comprenant
- au moins un écrou (60) comprenant
- une face intérieure (61) avec un filetage intérieur,
- une face extérieure (62),
- une surface de fond (66) et
- une surface de tête (67) opposée à la surface de fond (66),
- au moins un manchon conique (130) et
- au moins un boulon fileté (30),
dans lequel
- le boulon fileté (30) présente dans un état non étiré un premier diamètre de filetage de boulon D_{B,ancien} et dans un état étiré un deuxième diamètre de filetage de boulon D_{B,nouveau} avec une géométrie de filetage de boulon modifiée,
- l'écrou (60) présente dans un état non comprimé un premier diamètre de filetage d'écrou D_{M,ancien} avec un filetage sensiblement adapté à la géométrie de filetage de boulon modifiée et présente dans un état comprimé un deuxième diamètre de filetage d'écrou D_{M,nouveau},
- la face extérieure (62) est configurée en forme de cône et
- le rétrécissement de la conicité va de la surface de fond (66) jusqu'à la surface de tête (67) ou va d'une bride (68) que l'écrou (60) présente au niveau de la surface de fond (66) jusqu'à la surface de tête (67).

9. Raccord à vis (10) selon la revendication 8, **caractérisé en ce que** le manchon conique (130) présente une surface de tête (134) par le biais de laquelle elle peut coopérer avec la surface de pression (154, 254) du réceptacle de pression (148, 248).

10. Raccord à vis (10) selon une ou plusieurs des revendications 8 et 9, **caractérisé en ce**
- **qu'**une paroi latérale (64) de l'écrou (60) présente au moins une cavité longitudinale (65) qui traverse la paroi latérale (64) de l'écrou (60) dans la direction d'un axe longitudinal central z' de l'écrou (60) au moins sur une longueur partielle et dans la direction d'un axe x perpendiculaire à l'axe longitudinal central z' en intégralité.

11. Ecrou (60) à insérer dans le raccord à vis (10) selon une ou plusieurs des revendications 8 à 10), comprenant
- une face intérieure (61) avec un filetage intérieur,
- une face extérieure (62),
- une surface de fond (66) et
- une surface de tête (67) opposée à la surface de fond (66),
dans lequel
- la face extérieure (62) est configurée en forme de cône,
- le rétrécissement de la conicité va de la surface de fond (66) jusqu'à la surface de tête (67) ou va d'une bride (68) que l'écrou (60) présente au niveau de la surface de fond (66) jusqu'à la surface de tête (67) et
- une paroi latérale (64) de l'écrou (60) présente au moins une cavité longitudinale (65) qui traverse la paroi latérale (64) de l'écrou (60) dans la direction d'un axe longitudinal central z' de l'écrou (60) au moins sur une longueur partielle et dans la direction d'un axe x perpendiculaire à l'axe longitudinal central z' en intégralité.

12. Combinaison écrou/manchon conique (20, 25) à insérer dans un raccord à vis (10), comprenant
- un écrou (60) selon la revendication 11 et
- un manchon conique (130),
dans laquelle
- le manchon conique (130) est configuré au niveau d'une face intérieure de manchon conique (132) de façon correspondant sensiblement à une paroi latérale (64) de l'écrou (60).

13. Procédé pour créer un raccord à vis (10) avec un système de fixation (100, 200) selon une ou plusieurs des revendications 1 à 7, selon lequel l'unité de pression (107, 207) du système de fixation (100, 200) et un manchon conique (130) provoquent le pressage d'un écrou (60) avec un boulon fileté (30).

14. Procédé selon la revendication 13, **caractérisé en ce que**, par le biais d'un réceptacle de levage (248) de l'unité de pression (107, 207) ou d'un élément de pression (161) du réceptacle de levage (148), le manchon conique (130) coulissent dans la direction d'un axe longitudinal central z, z' sur l'écrou (60) du raccord fileté (10) au niveau d'une face intérieure de manchon conique (132) qui est appliquée substantiellement sur une face extérieure (62) de l'écrou (60).

15. Procédé selon une ou plusieurs des revendications 13 et 14, **caractérisé en ce qu'**au moins une cavité longitudinale (65) de l'écrou (60) présente une largeur B qui est réduite par le déplacement du manchon conique (130) sur l'écrou (60).

16. Procédé selon une ou plusieurs des revendications 13 à 15, **caractérisé en ce que** des flancs de filetage d'écrou (80) de l'écrou (60) qui sont opposés à des flancs de filetage de boulon (40) du boulon fileté (30) coulissent sur les flancs de filetage de boulon (40) jusqu'à ce qu'un appui sensiblement complet soit obtenu.

17. Utilisation d'un système de fixation (100, 200) qui est configuré selon une ou plusieurs des revendications 1 à 7 pour créer au moins un raccord à vis (10), dans laquelle l'unité de pression (107, 207) du système de fixation (100, 200) et un manchon conique (130) provoquent le pressage d'un écrou (60) avec un boulon fileté (30).
